# FASCICULE DE BREVET EUROPEEN

(11) **EP 3 034 992 B1**
(45) Date de publication et mention de la délivrance du brevet: **29.11.2017**
(21) Numéro de dépôt: 15200256.4
(22) Date de dépôt: 15.12.2015
(51) Int. Cl.: G02B 5/04, G02B 5/18, G03B 17/54, H04N 9/31, H04N 13/02, G02B 27/10, G01B 11/25, G02B 27/22

(54) **PROJECTEUR DE LUMIÈRE STRUCTURÉE ET SCANNER TRIDIMENSIONNEL COMPORTANT UN TEL PROJECTEUR**
PROJEKTOR FÜR STRUKTURIERTE BELEUCHTUNG, UND 3D-SCANNER, DER EINEN SOLCHEN PROJEKTOR ENTHÄLT
STRUCTURED LIGHT PROJECTOR AND THREE-DIMENSIONAL SCANNER COMPRISING SUCH A PROJECTOR

(30) Priorité: 16.12.2014 FR 1462551
(43) Date de publication de la demande: 22.06.2016
(73) Titulaire: COMMISSARIAT À L'ÉNERGIE ATOMIQUE ET AUX ÉNERGIES ALTERNATIVES, 75015 Paris (FR)
(72) Inventeur: MICHEL, Rémi, 91400 ORSAY (FR); PARTOUCHE-SEBBAN, David, 91680 BRUYERES LE CHATEL (FR)
(74) Mandataire: Santarelli

(56) Documents cités:
- US-A1- 2002 196 415
- US-A1- 2007 115 484
- US-A1- 2010 008 588
- US-A1- 2011 050 859
- US-A1- 2014 028 800
- JASON GENG: "Structured-light 3D surface imaging: a tutorial", ADVANCES IN OPTICS AND PHOTONICS, vol. 3, no. 2, 31 mars 2011 (2011-03-31), page 128, XP055033088, DOI: 10.1364/AOP.3.000128

## Description

La présente demande concerne un projecteur de lumière structurée, notamment un projecteur de lumière structurée pour un scanner tridimensionnel, ainsi qu'un scanner tridimensionnel comportant un tel projecteur.

Les scanners tridimensionnels sont des appareils qui permettent de mesurer les coordonnées géométriques (x, y, z) de chaque point de la surface d'une scène ou d'un objet. Le résultat de la mesure est souvent considéré comme une carte dite « de profondeur » de la scène imagée car la profondeur (ou distance) z est généralement exprimée en fonction de la position (x, y) dans un système de coordonnées cartésiennes. Les cartes de profondeur ainsi collectées peuvent alors être utilisées pour construire des images de synthèse en trois dimensions (objets numériques) à des fins diverses.

Plusieurs technologies de scanner sont utilisées : certaines nécessitent un contact physique avec la surface à numériser, par exemple les machines à mesurer tridimensionnelles (MMT) pour lesquelles la mesure est réalisée en palpant la surface au moyen d'un capteur par contact ou d'un stylet. D'autres permettent de réaliser la mesure sans contact physique, comme par exemple les systèmes stéréoscopiques basés sur l'utilisation de deux caméras, légèrement espacées et pointant vers la même scène, pour lesquels la profondeur est déduite de la déformation géométrique entre les deux images.

Les scanners tridimensionnels dits « à lumière structurée » sont une famille spécifique de scanners tridimensionnels sans contact. Ces scanners sont constitués d'un projecteur de lumière, généralement réalisé sur le principe d'un vidéoprojecteur ou constitué d'un système laser générant des franges d'interférences (pour la technique dite du « phase-shifting »), et d'au moins une caméra décalée géométriquement par rapport au projecteur afin de réaliser une configuration stéréoscopique. Le projecteur projette un motif lumineux dit « structuré », à une ou deux dimensions géométriques (par exemple une ligne ou une image) et éventuellement coloré, sur la surface à mesurer. La caméra, positionnée à une distance du projecteur appelée « base stéréoscopique », acquière et enregistre une image de la scène. Le motif structuré projeté est constitué de motifs élémentaires (appelés « éléments structurés » dans ce document) adéquatement choisis de manière à ce qu'il soit possible de les détecter dans l'image acquise.

La position géométrique (x, y, z) de chaque point de la surface de la scène observée s'obtient par une méthode de triangulation entre les directions de projection et d'imagerie de chaque élément structuré. Les motifs utilisés dans les scanners tridimensionnels à lumière structurée sont généralement projetés en noir et blanc, en niveaux de gris, en couleurs ou dans une combinaison des trois effets (ceci est par exemple exposé dans l'article de J. Geng, « Structured-Light 3D surface imaging: a tutorial », Advances in Optics and Photonics 3, pp. 128-160, 2011). Dans le cas où la scène observée est statique, des méthodes dites « multiple-shot » de projections (temporellement) séquentielles de motifs (par exemple, les techniques dites de « phase shifting », de « binary patterns » ou de « gray coding »), permettent d'obtenir des mesures précises et fiables grâce à la complémentarité des informations disponibles dans les images de la séquence (voir par exemple J. Geng, 2011). Dans le cas où la scène à observer est en mouvement, il est alors nécessaire d'employer des méthodes de projections non séquentielles, à une image (dite « single-shot »), voire à deux images (dites « two-shot ») si l'acquisition des deux images est suffisamment rapide par rapport au mouvement propre de la scène. Les techniques non séquentielles impliquent de projeter une multitude d'éléments structurés suffisamment différents les uns des autres afin d'être identifiables dans l'image acquise par la caméra. Ces éléments structurés peuvent être, par exemple, des bandes dont les couleurs sont définies par une séquence dite de « De Bruijn », ou bien encore des nuages de points codés (voir J. Geng, 2011).

Lorsque la surface à numériser présente de forts gradients de relief ou des discontinuités (trous ou occlusions par exemple), la carte de profondeur produite par les scanner tridimensionnels à lumière structurée de l'art antérieur au moyen de techniques non séquentielles peut être biaisée ou incomplète à proximité de ces formes singulières car certains éléments structurés projetés ne sont alors que partiellement observables (i.e. en partie masqués) ou trop déformés, et ne sont donc pas toujours identifiables dans l'image acquise par la caméra.

De plus, les scanners tridimensionnels à lumière structurée de l'art antérieur permettent essentiellement de produire la carte de profondeur de la scène imagée, voire éventuellement de disposer d'informations sur son apparence (couleur, texture,...), mais ils ne fournissent pas de données quantitatives permettant de déduire la nature des matériaux constitutifs des éléments de la scène.

De telles informations, utilisées conjointement à la carte de profondeur, seraient très utiles pour produire, précisément et automatiquement, une identification et une classification des éléments de la scène.

Un procédé est proposé dans les demandes de brevet US 2014/0028800 et US 2014/0028801. Il repose sur une utilisation théorique d'un dispositif de projection de lumière structurée dans le domaine spectral et d'un dispositif d'imagerie permettant d'assurer une mesure du spectre de la lumière réfléchie (ou diffusée) par la surface de la scène ou de l'objet observé. La structuration du motif est réalisée dans le domaine spectral plutôt que dans les domaines géométrique, colorimétrique et/ou temporel. L'information spectrale réfléchie par la surface des éléments de la scène constitue une donnée utile pour déterminer la nature des matériaux observés. Il y est également suggéré, à titre d'exemple, de réaliser une projection multispectrale de motifs géométriques binaires, de manière similaire à la technique « binary patterns » à la différence que les motifs binaires ne sont pas projetés séquentiellement dans le temps mais simultanément dans des longueurs d'onde différentes, la séparation des images in fine étant alors assurée par le dispositif d'imagerie spectrale. En d'autres termes, le procédé proposé dans ces brevets repose sur une utilisation hypothétique d'un projecteur doté de plusieurs canaux de longueur d'onde relativement étroits et permettant de projeter simultanément des images géométriques différentes d'un canal de longueur d'onde à un autre. En outre, il y est indiqué que le nombre de canaux du projecteur doit être assez élevé, typiquement supérieur à 10 par analogie à la technique « binary patterns », pour assurer une précision suffisante sur la carte de profondeur de la scène. Cependant, aucun dispositif permettant de mettre en oeuvre le procédé n'est décrit ni même proposé. Il est cependant mentionné dans ces documents que les canaux de longueur d'onde du projecteur peuvent être éventuellement associés à l'utilisation de sources monochromatiques telles que des sources lasers ou des LEDs, mais les caractéristiques techniques permettant d'aboutir à un prototype ne sont pas fournies.

Les vidéoprojecteurs disponibles commercialement ne permettent pas de satisfaire à ce besoin.

En effet, les vidéoprojecteurs disponibles commercialement sont généralement dotés des trois canaux colorimétriques correspondant aux couleurs rouge, vert et bleu (RVB), comme ceci est par exemple décrit dans les brevets US6247814B1 et US2004085634A1, ce qui est suffisant pour projeter des éléments structurés dans les domaines géométrique, colorimétrique et temporel, mais pas pour mesurer une réflectance spectrale de la scène observée avec précision car ceci nécessite une large gamme de longueurs d'ondes.

Il existe toutefois des vidéoprojecteurs possédant plus de trois canaux colorimétriques (voir par exemple brevets WO2006096598A2, US2010156958A1 et US2010315596A1) mais ces projecteurs sont plus encombrants et plus couteux, notamment du fait qu'ils comportent un prisme optique de séparation des couleurs plus complexe, et qu'il est nécessaire d'ajouter une matrice de micro-miroirs (DMD-Digital Micromirror Device) par canal colorimétrique supplémentaire.

Enfin, afin d'optimiser la précision de la mesure de la carte de profondeur et de l'information spectrale réfléchie, il serait souhaitable de pouvoir modifier en temps réel le nombre et les gammes de longueur d'onde des canaux du projecteur pour adapter la lumière structurée projetée aux caractéristiques spectrales de l'éclairage ambiant et à la réflectance (c'est-à-dire la signature optique) des éléments de la scène. Cette dernière caractéristique n'est réalisable que de manière très limitée avec un projecteur dont les canaux de longueur d'onde sont fixés lors de la fabrication par les sources monochromatiques sélectionnées.

L'objet de la présente demande vise à résoudre au moins en partie les problèmes précités pour projeter de la lumière structurée dans le domaine spectral.

A cet effet, est proposé un projecteur de lumière structurée comportant un dispositif d'encodage spectral de faisceau lumineux dans lequel le codage optique du faisceau lumineux est par exemple assuré par un composant qui peut être passif (par exemple un masque optique) ou actif (par exemple une cellule DMD).

Plus précisément, est proposé, selon un premier aspect, un projecteur de lumière structurée comportant successivement :
- une source de lumière configurée pour émettre un faisceau d'un spectre continu entre une longueur d'onde minimale (λmin) et une longueur d'onde maximale (λmax),
- un système optique de décomposition spectrale, configuré pour capter le spectre du faisceau émis par la source de lumière et le décomposer spectralement avec une image du faisceau à la longueur d'onde minimale (λmin) jouxtant une image du faisceau à la longueur d'onde maximale (λmax) dans au moins un plan prédéterminé transversal à un chemin optique du faisceau et le long d'une ligne de ce plan constituant une frontière,
- un dispositif d'encodage configuré pour encoder le spectre décomposé spectralement,
   le dispositif d'encodage comportant un masque,
   le masque étant positionné dans le plan prédéterminé, et
   le masque comportant un motif matriciel d'encodage binaire formé d'une série de 2*n lignes et d'une série de m colonnes, où « n » est égal ou supérieur à 4, voire 5, voire 7, voire encore 8 ou 9, et où « m » est égal ou supérieur à 16, voire 32, voire 128, voire encore 256,
   une démarcation entre les lignes « n » et « n+1 » étant superposée à ladite frontière,
   un sous-motif défini par les lignes « 1 » à « n » étant éclairé par l'image du faisceau à la longueur d'onde λmin et un sous-motif défini par les lignes « n+1 » à « 2*n » étant éclairé par l'image du faisceau à la longueur d'onde λmax,
   le sous-motif défini par les lignes « 1 » à « n » étant identique ou complémentaire du sous-motif défini par les lignes « n+1 » à « 2*n », et
   un sous-motif défini par les lignes « i » à « i+n-1 », i étant compris entre 2 et n, étant éclairé par une image du faisceau à une longueur d'onde λ donnée comprise entre λmin et λmax,
   les m colonnes étant perpendiculaires à cette démarcation et
   deux colonnes voisines comportant chacune un encodage binaire différent de l'autre,
- un système optique de recombinaison spectrale configuré pour recombiner en un faisceau recombiné le spectre décomposé spectralement et encodé, et
- un système optique de projection configuré pour projeter le faisceau recombiné sur une scène à observer.

Un tel projecteur présente ainsi par exemple les avantages suivants :
(1) Il est simple à fabriquer: dans certaines configurations proposées de la présente invention, un nombre élevé de canaux spectraux peut s'obtenir avec une seule source lumineuse, un seul composant de codage optique et des composants optiques standards (lentilles, miroirs, prismes, réseaux, etc.) et en nombre limité.
(2) La source utilisée peut être incohérente à large spectre et il n'est donc pas nécessaire de recourir à un jeu de sources monochromatiques pour produire des canaux spectraux de projection. Par conséquent, une grande variété de sources naturelles (soleil, lumière du jour, etc.) ou artificielles (lampe à incandescence, LED polychromatiques, etc.) peut être employée.
(3) Dans certaines configurations proposées de la présente invention et dans le cas de l'emploi d'un composant actif de codage optique, le nombre et les gammes des longueurs d'onde des canaux du projecteur peuvent être modifiés en temps réel.

Le masque comporte avantageusement au moins m/5 encodages différents dans les m colonnes.

Ceci contribue à réduire une ambiguïté d'interprétation lors du post-traitement des images acquises.

Par ailleurs, un encodage est avantageusement répété dans au plus 5 colonnes.

Ceci contribue à réduire une complexité de l'algorithme de détermination de la carte de profondeur.

Il est donc encore plus intéressant que les deux conditions précédentes soient cumulées.

Selon un exemple intéressant, les m colonnes du sous-motif défini par les lignes « 1 » à « n » comportent au maximum 5 répétitions d'une même suite d'encodages différents les uns des autres. C'est-à-dire par exemple un encodage selon les colonnes du type « ABCABCABCABCABC » ; en l'occurrence il s'agirait d'un encodage de m=15 colonnes comportant m/5=3 encodages différents avec chaque encodage qui est répété 5 fois et chaque suite d'encodage « ABC » qui est également ici répétée 5 fois.

De préférence, les m colonnes du sous-motif défini par les lignes « 1 » à « n » comportent des encodages tous différents les uns des autres.

Il s'agit alors d'un cas préféré, ou dit « cas parfait » car chaque colonne est alors facilement identifiable en terme de positionnement, c'est une configuration du masque comportant un minimum d'ambigüité.

Selon un autre exemple intéressant, le nombre de colonnes « m » est égal à « 2^n », n le nombre de lignes.

Par exemple, les lignes du sous-motif défini par les lignes « 1 » à « n » comportent des encodages représentant une succession de puissances de 2.

On entend ici par succession de puissances de 2 que les lignes du sous-motif considéré comportent un encodage représentant une succession de structures périodiques dont le nombre de périodes, d'une ligne à une autre, est égal à 2⁰, 2¹, 2², ..., 2ⁿ⁻¹.

Selon un exemple particulièrement intéressant, le sous-motif défini par les lignes « 1 » à « n » comporte n lignes et m=2^n colonnes dont les lignes comportent des encodages représentant une succession de puissances de 2.

Ceci permet d'obtenir un encodage simple tout en s'assurant que toutes les colonnes comportent un encodage différent des autres.

Possiblement, les encodages des colonnes ont été mélangés.

Selon encore un autre exemple, le sous-motif défini par les lignes « 1 » à « n » comporte n lignes et m=2^n colonnes dont les lignes comportent des encodages représentant une succession de puissances de 2 et ont été mélangés.

Pour réaliser un tel masque, le dispositif d'encodage comporte par exemple un agencement matriciel de zones réfléchissantes et de zones absorbantes. Ou, selon un autre exemple, le dispositif d'encodage comporte un agencement matriciel de zones transparentes et de zones opaques.

Dans une configuration de fonctionnement par transparence/opacité, le dispositif d'encodage comporte par exemple un système opto-électronique constitué de pixels dont la transparence optique est pilotable électroniquement, le masque étant alors formé par le système opto-électronique.

Un tel système opto-électronique particulièrement commode dans le cadre de la présente invention est par exemple un écran à cristaux liquides (LCD - Liquid Crystal Display).

Dans une configuration de fonctionnement par réflexion/absorption, le dispositif d'encodage comporte par exemple un système opto-électronique constitué de pixels dont la réflectivité optique est pilotable électroniquement, le masque étant alors formé par le système opto-électronique.

Un tel système opto-électronique particulièrement commode dans le cadre de la présente invention est par exemple une matrice de micro-miroirs (DMD Digital Micromirror Display).

Selon un exemple de réalisation particulièrement commode, la source de lumière du projecteur comporte une source de lumière naturelle ou une source de lumière artificielle.

Par exemple, il peut s'agir d'une source de lumière artificielle continue, par exemple une lampe à filament ou à incandescence, une lampe halogène, une LED, ou autre.

Selon un exemple de configuration intéressant, le système optique de décomposition spectrale et le système optique de recombinaison spectrale sont le même système optique traversé dans un sens et en sens inverse par le faisceau.

Une telle configuration permet de rendre le projecteur plus compact en minimisant le nombre de composants pour sa réalisation.

Selon encore un exemple intéressant, le projecteur comporte un diaphragme. Le diaphragme est par exemple positionné entre la source de lumière et le système optique de décomposition spectrale. Il est par exemple configuré pour délimiter géométriquement le faisceau.

Par exemple, le projecteur comporte un miroir convergent et/ou une lentille convergente positionné(s) entre la source de lumière et le système optique de décomposition spectrale sur un chemin optique du faisceau, voire entre la source de lumière et le diaphragme le cas échéant.

Dans un exemple privilégié de réalisation, le système optique de décomposition spectrale comporte un prisme optique. Il peut également comporter un réseau optique.

Selon encore un autre exemple intéressant, le projecteur comporte au moins un objectif. L'objectif comporte par exemple une lentille convergente, ou un miroir, par exemple un miroir convergent. Dans une configuration privilégiée, l'objectif est alors positionné après le système optique de décomposition spectrale sur un chemin optique du faisceau.

Par exemple, le projecteur comporte une lentille convergente puis un miroir positionnés avant le système optique de décomposition spectrale sur un chemin optique du faisceau.

Le miroir est alors par exemple configuré pour renvoyer le faisceau dans une direction différente en fonction des besoins de compacité à donner au projecteur.

Selon un exemple privilégié de réalisation, le système optique de recombinaison spectrale comporte un prisme optique. Il peut également comporter un réseau optique.

Selon encore un exemple intéressant, le projecteur comporte au moins un objectif. L'objectif comporte par exemple une lentille convergente, ou un miroir, par exemple un miroir convergent. Dans une configuration privilégiée, l'objectif est positionné avant le système optique de recombinaison spectrale sur un chemin optique du faisceau.

Selon encore un autre exemple intéressant, le projecteur comporte un miroir puis une lentille convergente positionnés après le système optique de recombinaison spectrale, par exemple après le prisme, sur un chemin optique du faisceau.

Le miroir est alors par exemple configuré pour renvoyer le faisceau dans une direction différente en fonction des besoins de compacité à donner au projecteur.

Est également proposé, selon un autre aspect de la présente invention, un scanner tridimensionnel à lumière structurée comportant un projecteur et un dispositif de détection, caractérisé en ce que le projecteur est un projecteur tel que décrit précédemment, comportant tout ou partie des caractéristiques mentionnées précédemment, et en ce que le dispositif de détection est une caméra multi-spectrale.

Avantageusement, la caméra comporte au moins 4 canaux spectraux.

La caméra est par exemple disposée à une distance déterminée du projecteur, appelée « base stéréoscopique ».

Selon un exemple de réalisation particulièrement intéressant, la caméra multi-spectrale comporte au moins 6 canaux spectraux, voire 8, voire 9.

Selon un autre exemple de réalisation intéressant, la caméra multi-spectrale est configurée pour utiliser un nombre de canaux spectraux égal à un nombre de canaux spectraux définis par le masque du dispositif d'encodage.

Selon un autre exemple de réalisation particulièrement intéressant, notamment pour augmenter la performance du scanner quand le dispositif d'encodage n'est pas pilotable électroniquement, le scanner tridimensionnel comporte aussi une source de lumière secondaire pilotable électroniquement et dont le spectre est continu entre la longueur d'onde minimale (λmin) et la longueur d'onde maximale (Àmax), par exemple un flash d'appareil photographique, afin d'éclairer la scène temporairement pour enrichir la mesure de réflectance des éléments de la scène par une ou plusieurs acquisition(s) d'image(s) avec la caméra multi-spectrale.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
La figure 1 présente le principe général d'un projecteur selon un exemple de réalisation de la présente invention,
Les figures 2a et 2b détaillent des paramètres géométriques du faisceau-gabarit 2,
La figure 3 montre schématiquement un exemple de réalisation d'éléments d'un projecteur selon la figure 1 formés de lames de verre à faces planes et parallèles,
La figure 4 montre schématiquement un autre exemple de réalisation des éléments de la figure 3,
Les figures 5a et 5b illustrent respectivement la propagation du faisceau F_{λmax} et du faisceau F_{λmin}, correspondant respectivement à la longueur d'onde maximale (λₘₐₓ) et à la longueur d'onde minimale (λₘᵢₙ) du faisceau incident, et la figure 5c illustre la propagation combinée des faisceaux extrêmes P_{λmin} et F_{λmax} et présente un exemple de masque binaire double dont chaque sous-motif représente les 16 valeurs binaires d'une base canonique de degré 4,
La figure 6 présente une définition de l'angle de dispersion spectrale, noté α_{dispersion}, caractérisant la dispersion spectrale introduite par le système optique de décomposition spectrale 3,
Les figures 7a et 7b présentent un exemple de faisceau incident qui est totalement encodé par le dispositif d'encodage 5,
La figure 8 montre les positions géométriques des images optiques intermédiaires de la section S_{faisceau-gabarit} du faisceau-gabarit 2 formées sur le dispositif d'encodage 5 en fonction de la longueur d'onde de la lumière,
La figure 9 illustre un exemple d'encodage spectral obtenu le long d'une ligne d'une image obtenue en sortie du système optique de recombinaison spectrale selon l'exemple de masque de la figure 5c,
La figure 10 montre des zones du masque éclairées par cinq faisceaux lumineux du faisceau incident de longueurs d'onde différentes dans un exemple où le faisceau incident comporte cinq longueurs d'onde monochromatiques,
La figure 11 est une représentation schématique de l'image de sortie du système optique de recombinaison spectrale de l'exemple de la figure 10,
La figure 12 présente les zones du masque éclairées par quatre canaux dans un exemple où le spectre optique du faisceau lumineux incident est continu,
La figure 13 est une représentation schématique de l'image de sortie du système optique de recombinaison spectrale de l'exemple de la figure 12,
La figure 14 montre un autre exemple de motif de codage du masque et une représentation de l'encodage spectral obtenu le long d'une ligne dans l'image de sortie,
La figure 15 illustre un exemple de masque binaire dont les colonnes ont été mélangées,
La figure 16 présente un projecteur selon un exemple de réalisation de la présente invention,
La figure 17 présente schématiquement un scanner tridimensionnel à lumière structurée selon un exemple de réalisation de la présente invention, et
La figure 18, formée des figures 18a à 18d, montre des images de zones du masque observées par une caméra multispectrale dans les différents canaux spectraux de l'image projetée selon un exemple de réalisation de la présente invention.

Les éléments identiques représentés sur les figures précitées sont identifiés par des références numériques identiques.

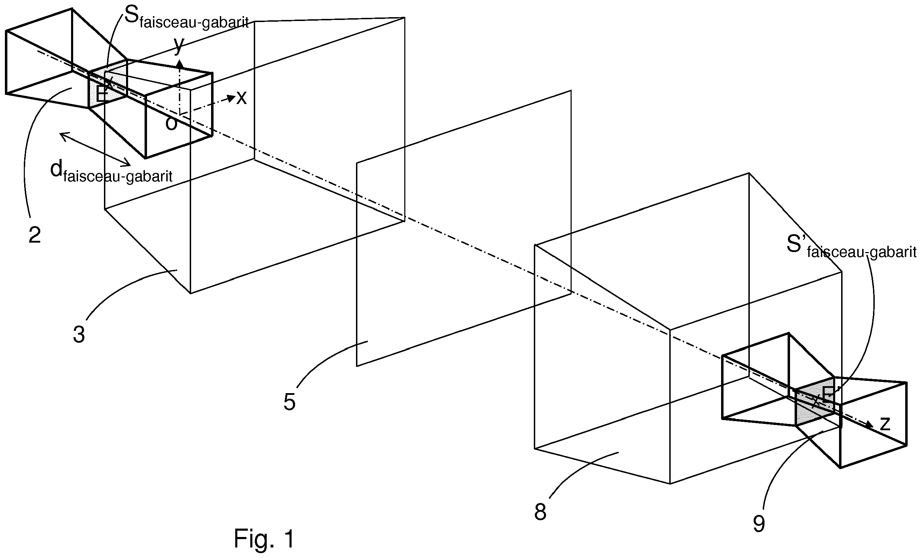

Le principe général d'un projecteur de lumière structurée selon l'invention est présenté schématiquement en figure 1 selon un exemple de réalisation. Le projecteur comporte principalement (outre une source de lumière et un moyen de projection optionnel non représentés sur ce schéma) :
- un système optique de décomposition spectrale 3, configuré pour réaliser une séparation géométrique des rayons du faisceau incident en fonction de leur longueur d'onde (par exemple une déviation angulaire dépendante de la longueur d'onde au moyen d'un prisme ou d'un réseau optique, ou encore un décalage transversal du faisceau au moyen d'une lame de verre à faces planes et parallèles) selon une direction essentiellement transverse à la marche du faisceau, par exemple ici selon une direction verticale représentée par un axe (Oy), et optionnellement pour focaliser et/ou concentrer le faisceau lumineux dans au moins un plan prédéterminé transversal à un chemin optique du faisceau, et par exemple sur un dispositif d'encodage 5, également dit « de codage multiplicatif » 5,
- le dispositif d'encodage 5, configuré pour encoder le spectre du faisceau lumineux dispersé spectralement, par exemple par masquage partiel, par exemple dans un cas de masque à niveaux de gris, ou total, par exemple dans un cas de masque binaire, de certaines zones. A cet effet, le dispositif d'encodage 5 comporte par exemple un masque qui est par exemple une matrice de micro-miroirs (DMD-Digital Micromirror Device) pour réaliser le masquage en réflexion, ou, pour réaliser le masquage en transmission, un masque optique ou un écran à cristaux liquides (LCD - Liquid Crystal Display),
- et un système optique de recombinaison spectrale 8, configuré pour recombiner spectralement le faisceau lumineux, en compensant partiellement ou totalement la séparation géométrique (i.e. la dispersion spectrale) des rayons incidents dépendante de la longueur d'onde qui a été introduite par le système optique de décomposition spectrale 3.

Sur le schéma de la figure 1, le système optique de décomposition spectrale 3, le dispositif d'encodage 5 et le système optique de recombinaison spectrale 8 sont représentés en ligne sur un même axe optique mais en pratique il peut bien entendu en être autrement compte tenu des décalages ou des déviations du faisceau lumineux pouvant être introduits par les composants optiques constituant ces éléments, ou par souci de compacité ou d'agencement des éléments du projecteur.

La fonction du système optique de recombinaison spectrale 8 peut éventuellement être assurée par le système optique de décomposition spectrale 3 si le projecteur est conçu de sorte que la lumière passe deux fois dans le système optique de décomposition spectrale 3 : par exemple, une fois dans un sens et une fois en retour inverse. Autrement dit, le système optique de recombinaison spectrale 8 et le système optique de décomposition spectrale 3 peuvent en soi être formés des mêmes éléments, en une même entité physique.

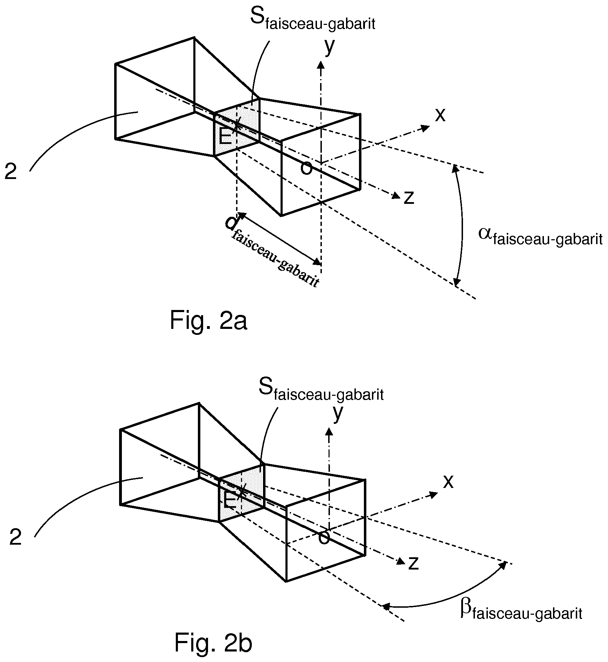

Selon le présent exemple de réalisation schématisé, les éléments du projecteur sont possiblement configurés pour encoder un faisceau incident « optimal » géométriquement, c'est-à-dire que le faisceau incident est optimisé, matérialisé par un faisceau-gabarit 2 (voir figures 1, 2a et 2b). Le faisceau-gabarit 2 considéré ici est centré sur l'axe optique d'entrée (Oz) du projecteur. Il présente par exemple une section rectangulaire (S_{faisceau-gabarit}), sensiblement perpendiculaire à l'axe optique d'entrée (Oz), et centrée sur l'axe (Oz) en un point dit de focalisation ou concentration, noté E. Dans ce document, il est fait référence à cette section du faisceau, c'est-à-dire le faisceau formé dans la section S_{faisceau-gabarit}, sous le nom de « waist », qui est le terme couramment utilisé en français, par analogie à un faisceau laser. Cette section (S_{faisceau-gabarit}) est ici positionnée à une distance du système optique de décomposition spectrale 3, notée (d_{faiSceau-gabarit}), sur l'axe optique d'entrée (Oz), considérée entre le point E et une entrée, en un point O, du système optique de décomposition spectrale 3. Le faisceau-gabarit 2 en sortie du « waist » est en outre configuré pour présenter deux ouvertures angulaires α_{faisceau-gabarit} et β_{faisceau-gabarit} (représentés figures 2a et 2b) dans deux directions, respectivement ici Oy, qui représenté ici une direction verticale, et Ox, qui représente ici une direction horizontale, orthogonales l'une à l'autre et à l'axe (Oz).

Dans le cadre de la présente description, un faisceau-gabarit est considéré par défaut mais il pourrait bien entendu s'agir du faisceau incident non délimité géométriquement, comme ceci sera décrit ultérieurement.

La fonction, optionnelle, de focalisation du faisceau lumineux sur le dispositif de codage multiplicatif 5 du système optique de décomposition spectrale 3 consiste à former intégralement l'image du « waist » (i.e. de la section S_{faisceau-gabarit}) sur le dispositif 5.

Sur le schéma de principe de la figure 1, la position du « waist » du faisceau est, au sens de l'optique géométrique, un objet réel pour le système optique de décomposition spectrale 3. Toutefois, la présente invention ne se limite pas qu'à cette configuration de faisceau d'entrée. Elle s'applique aussi si la position du « waist » est virtuelle pour le système optique 3 ou si le « waist » est localisé à l'infini. Par exemple, s'il est localisé entre le système optique de décomposition spectrale 3 et le dispositif de codage multiplicatif 5, cela signifie que pour réaliser la fonction de focalisation du faisceau lumineux sur le dispositif de codage multiplicatif 5 le système optique de décomposition spectrale 3 comporterait un système optique essentiellement divergent, alors que ce système optique de décomposition spectrale 3 est essentiellement convergent dans le cas de la figure 1 où le « waist » est un objet réel pour le système optique de décomposition spectrale 3. Enfin, dans le cas où le « waist » serait à l'infini, le système optique de décomposition spectrale 3 serait possiblement essentiellement convergent et le dispositif de codage multiplicatif 5 serait par exemple positionné au niveau du foyer image du système optique de décomposition spectrale 3, selon les dimensions de l'image de la section S_{faisceau-gabarit} (par le système optique de décomposition spectrale 3) et du masque du dispositif d'encodage 5 par exemple.

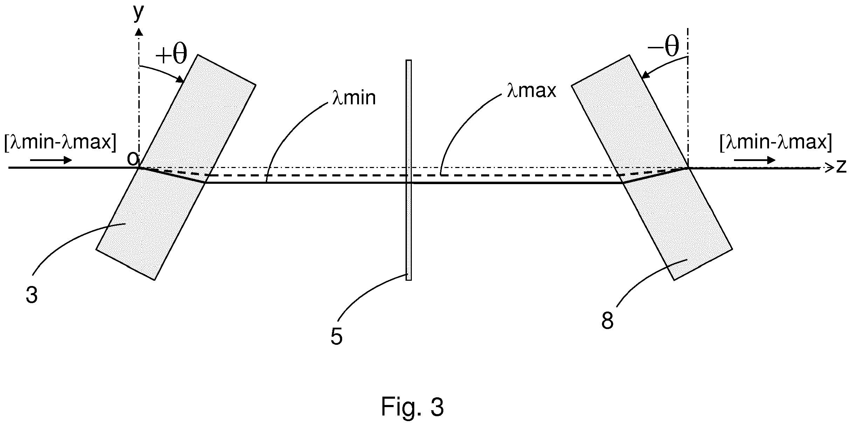

La fonction de focalisation/concentration du faisceau lumineux sur le dispositif de codage multiplicatif 5 du système optique de décomposition spectrale 3 est généralement un avantage pour réaliser un projecteur dont la richesse de l'encodage spectral est optimisée, c'est-à-dire que le taux de corrélation entre les encodages spectraux des différents éléments structurés obtenus à la sortie du dispositif d'encodage spectral de faisceaux lumineux 5 est suffisamment faible. Néanmoins, certaines configurations moins performantes ou polyvalentes peuvent être envisagées sans cette fonction. Par exemple (voir figure 3), il est possible de réaliser un projecteur comportant une première lame de verre à faces planes et parallèles (dont les faces sont inclinées par rapport à l'axe Oy d'un angle +θ autour de l'axe (Ox)) pour séparer géométriquement les rayons incidents en fonction de leur longueur d'onde (c'est-à-dire formant le système optique de décomposition spectrale 3), un dispositif de codage multiplicatif 5 utilisé en transmission (par exemple un masque optique), et une seconde lame de verre à faces planes et parallèles (dont les faces sont inclinées par rapport à l'axe Oy de angle égal à -θ autour de l'axe (Ox)) pour recombiner spectralement les rayons incidents (c'est-à-dire formant le système optique de recombinaison spectrale 8).

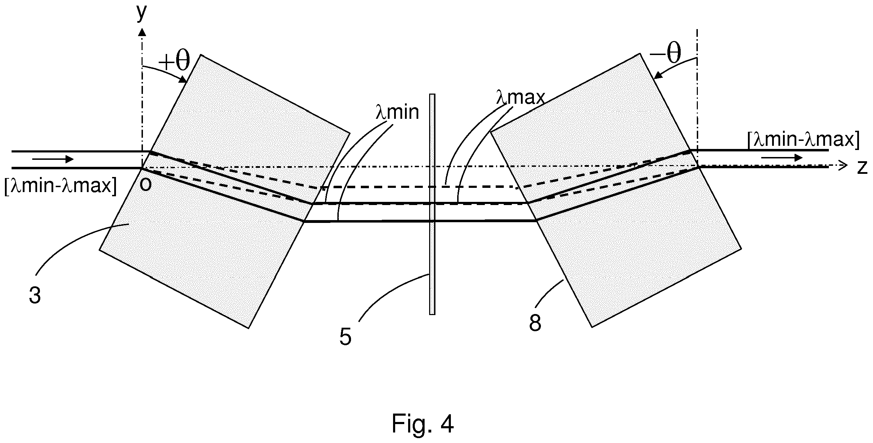

L'exemple représenté sur la figure 4 reprend le principe illustré sur la figure 3 en détaillant les chemins empruntés par le faisceau de longueur d'onde λmin et le faisceau de longueur d'onde λmax dans une configuration privilégiée dans laquelle ces faisceaux sont juxtaposés selon une ligne constituant une frontière.

La lumière constituant le faisceau incident est par exemple polychromatique : son spectre peut être discret (i.e. constitué d'un nombre fini de longueurs d'onde) ou continu. La gamme spectrale peut s'étendre dans les domaines ultraviolet et/ou visible et/ou infrarouge selon l'application. Le faisceau peut donc provenir d'une source naturelle (soleil, lumière du jour, etc.) ou artificielle (lampe à incandescence, LED polychromatique, jeu de plusieurs LED quasi-monochromatiques, jeu de plusieurs diodes lasers, etc.).

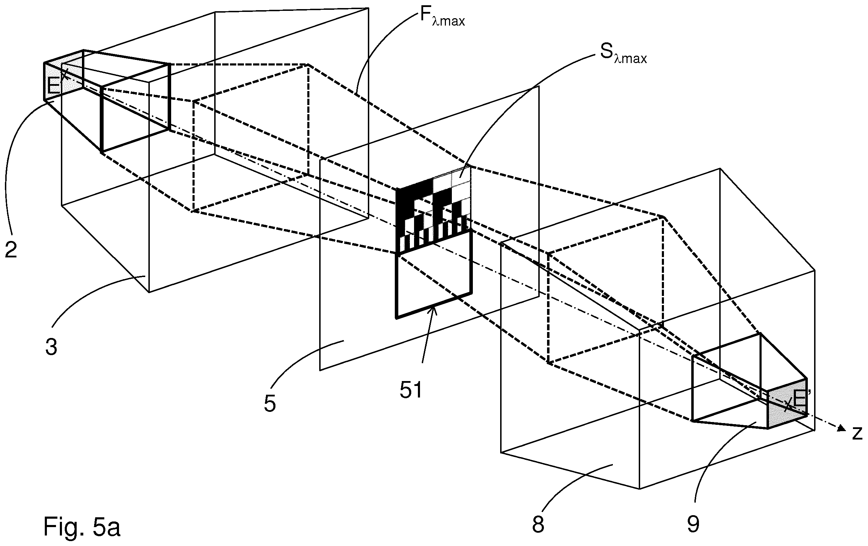

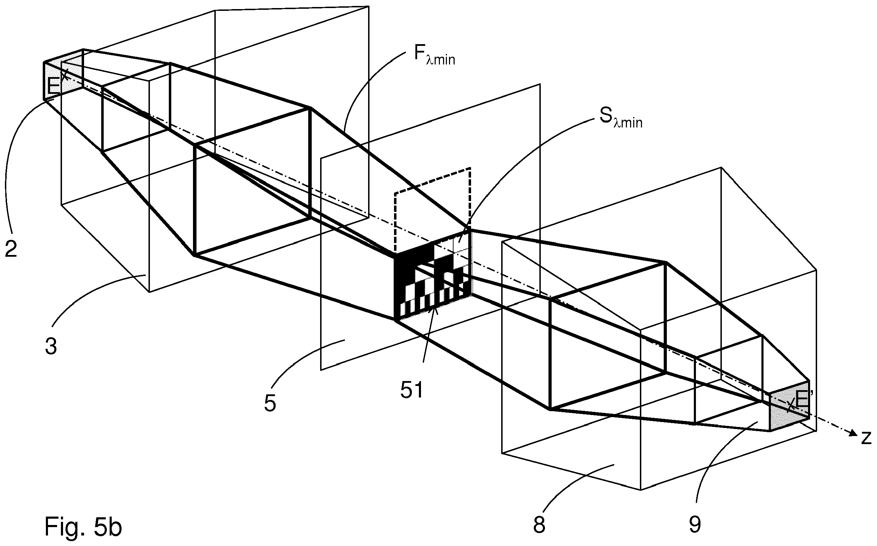

Le projecteur est avantageusement optiquement configuré pour une gamme donnée de longueurs d'onde, notée ici [λmin-λmax]. Les figures 5a et 5b représentent respectivement la propagation optique de la lumière dans les principaux composants optiques précités du projecteur pour la longueur d'onde maximale (λmax) et la longueur d'onde minimale (λmin) du faisceau incident, en particulier lorsque celui-ci est matérialisé par le faisceau-gabarit 2. Dans ces figures, la dispersion spectrale des rayons incidents est supposée être une déviation angulaire verticale produite en entrée du système optique de décomposition spectrale 3 et l'image du waist du faisceau-gabarit est formée sur le dispositif de codage multiplicatif 5 par exemple par un système optique convergent (par exemple une lentille en transmission ou un miroir en réflexion), par exemple localisé en sortie du système optique de décomposition spectrale 3. Bien que dans ces schémas, la dispersion spectrale soit réalisée avant la reprise d'image par le système optique convergent, ces deux fonctions peuvent aussi être réalisées dans l'ordre inverse.

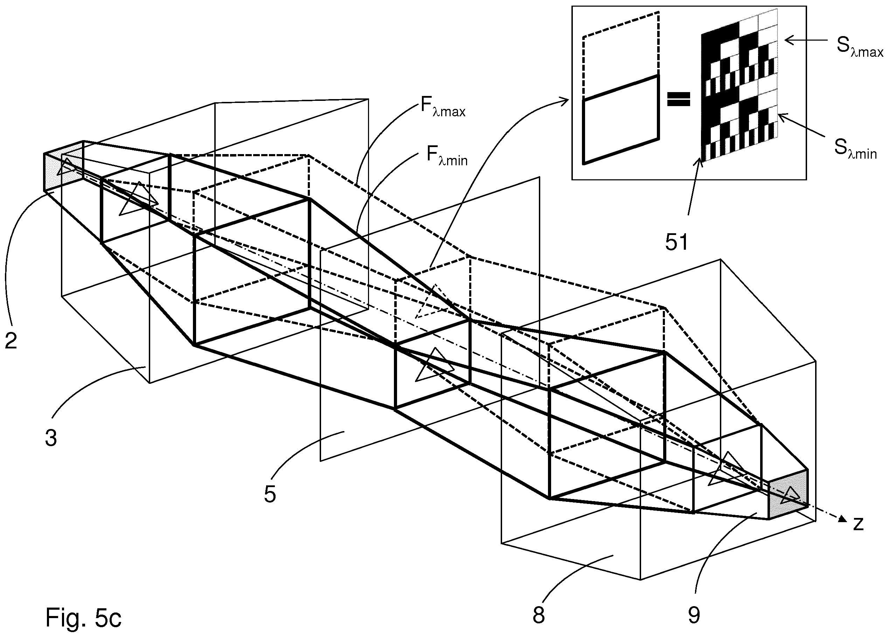

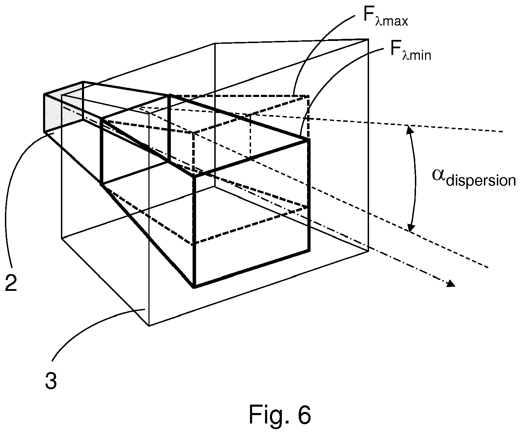

La figure 5c illustre la propagation combinée de ces deux faisceaux extrêmes. L'angle α_{dispersion} de dispersion spectrale introduite dans le système optique de décomposition spectrale 3 entre les faisceaux P_{λmin} et P_{λmax} est représenté sur la figure 6. Dans les schémas des figures 5a, 5b et 5c, les caractéristiques optiques du système optique de décomposition spectrale 3 sont configurées pour que ces deux faisceaux extrêmes, notées F_{λmin} et P_{λmax}, intersectent, rencontrent, le masque du dispositif d'encodage 5 selon deux sections rectangulaires identiques (notées S_{λmin} et S_{λmax} respectivement) et juxtaposées le long de la direction de la dispersion spectrale du faisceau (dans cet exemple, nous supposons que la dispersion en longueur d'onde place F_{λmin} à une position verticale inférieure à celle de F_{λmax}). Cette condition, dite de juxtaposition dans la suite, est la configuration préférée de l'invention mais l'invention s'applique aussi si les zones d'intersections se recouvrent partiellement ou sont distantes l'une de l'autre. Lorsque les zones d'intersections se recouvrent partiellement, le taux de corrélation entre les encodages spectraux contenus dans le faisceau lumineux de sortie du projecteur est plus élevé que dans le cas de la juxtaposition de ces deux zones. La richesse de l'encodage spectral diminue avec l'augmentation de ce taux de corrélation. Par exemple, dans un cas extrême où la déviation angulaire des rayons incidents dans le système optique de décomposition spectrale 3 ne serait pas dépendante de la longueur d'onde, les zones d'intersection se recouvriraient totalement et chaque canal spectral traverserait (« verrait ») la même zone du dispositif de codage multiplicatif 5. Chaque canal spectral serait donc encodé par la même information et le taux de corrélation serait égal à 1. Enfin, lorsque les zones d'intersections sont distantes l'une de l'autre, la richesse de l'encodage spectrale peut être conservée en adaptant le motif de codage multiplicatif à la géométrie de la figure lumineuse obtenue sur le dispositif de codage multiplicatif 5. Une telle configuration rend toutefois l'interprétation des mesures plus délicates.

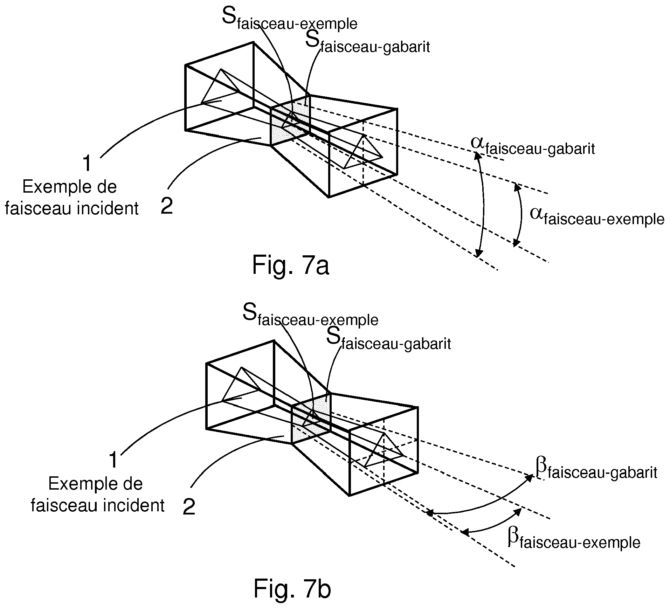

Lorsque le faisceau incident est celui matérialisé par le faisceau-gabarit 2, la totalité de la lumière incidente est encodée et le champ total d'encodage du système est utilisé. Dans d'autres situations :
- Soit le faisceau incident est totalement encodé : c'est le cas par exemple d'un faisceau d'entrée 1 défini sur les figures 7a et 7b (et dont le cheminement optique est apparent sur la figure 5c) pour lequel :
   ∘ une section S_{faisceau-exemple} au point E est incluse dans la section S_{faisceau-gabarit} du faisceau-gabarit 2,
   ∘ et les ouvertures angulaires α_{faisceau-exemple} et β_{faisceau-exemple} dans les deux directions Oy et Ox sont respectivement inférieures aux ouvertures angulaires α_{faisceau-gabarit} et β_{faisceau-gabarit} du faisceau-gabarit 2.
- Soit une partie seulement du faisceau incident est encodée car certains rayons sont physiquement diaphragmés, ou le faisceau incident est géométriquement délimité, soit en amont du système optique de décomposition spectrale 3 (situation qui serait alors analogue à celle d'un faisceau-gabarit) soit par le dispositif d'encodage 5 lui-même, par exemple dans un cas où une image sur le masque serait plus grande que la surface du masque. Par exemple, dans le cas d'un faisceau incident enveloppant le faisceau-gabarit 2, seule la fraction du faisceau incident correspondant à ce gabarit sera encodée.

Dans les schémas théoriques des figures 5a, 5b et 5c, le système optique de recombinaison spectrale 8 permettant de « recombiner » spectralement le faisceau lumineux, compense totalement la dispersion spectrale des rayons incidents initialement introduite par le système optique de décomposition spectrale 3 : les faisceaux F_{λmin} et F_{λmax} se recombinent en effet totalement. Dans l'exemple de réalisation représenté sur ces figures, la recombinaison spectrale est réalisée avant une reprise d'image par un système optique convergent mais ces deux fonctions peuvent aussi être réalisées dans l'ordre inverse. Le faisceau de sortie 9 obtenu en sortie du système optique de recombinaison spectrale 8 est centré sur l'axe optique de ce dernier (ici le même axe (Oz)) et se focalise à une position donnée de cet axe. Sa section, ici également rectangulaire, S'_{faisceau-gabarit} (schématisée sur la figure 1 notamment) est sensiblement perpendiculaire à l'axe optique de sortie, et son point de focalisation est noté E' (également représenté sur la figure 1 notamment). Les plans des sections S_{faisceau-gabarit} et S'_{faisceau-gabarit} sont conjugués optiquement par les éléments du projecteur situés entre eux. Sur ces figures, l'image S'_{faisceau-gabarit} de la section S_{faisceau-gabarit} est formée dans un espace image réel du système optique de recombinaison spectrale 8, mais il est possible de la former dans l'espace image imaginaire (par un choix adapté des éléments du système optique de recombinaison spectrale 8) si l'application le nécessite.

Un exemple de masque 51 du dispositif de codage multiplicatif 5 est représenté à l'emplacement de ces deux sections S_{λmin} et S_{λmax} sur les figures 5a, 5b et 5c : il s'agit ici d'un masque d'encodage binaire pour lequel les zones noires du masque représentent les parties opaques à la lumière (dans un cas de masque opérant en transmission ; ces zones correspondant à des zones absorbantes dans un cas de masque opérant en réflexion), équivalant à la valeur multiplicative 0 du flux lumineux le traversant, et les zones blanches représentent les parties transparentes (dans le cas d'un masque opérant en transmission ; ces zones correspondant à des zones réfléchissantes dans le cas d'un masque opérant en réflexion), équivalant à la valeur multiplicative 1. Le masque 51 est constitué de lignes et de colonnes, en particulier ici le motif de base, ou sous-motif, comporte m=16 colonnes et n=4 lignes à titre d'exemple : les colonnes du masque sont orientées suivant la direction liée à la dispersion spectrale du faisceau, i.e. la direction verticale sur ces figures (soit l'axe (Oy)), et les lignes sont perpendiculaires à la direction des colonnes, i.e. orientées ici suivant la direction transverse horizontale (soit l'axe (Ox)). Dans le cas de cet exemple, le masque 51 encode les deux faisceaux F_{λmin} et F_{λmax} de manière identique. Cet exemple d'encodage présente donc une répétition d'un motif de base (la moitié supérieure ou la moitié inférieure du masque) suivant la direction associée à la dispersion spectrale du faisceau : dans ce document, il est par exemple fait référence à ce type particulier d'encodage sous la dénomination « codage double » ou « masquage double ». Le motif de base du masque double contient ici 16 valeurs binaires d'une base canonique de degré 4, ici classées par ordre croissant de gauche à droite sur les figures 5a, 5b et 5c (à savoir pour chaque colonne à partir de la gauche selon les lignes en partant de celle du haut par exemple : 0000, 0001, 0010, ..., 1111), dont les 4 bits sont respectivement associés aux quatre lignes du motif.

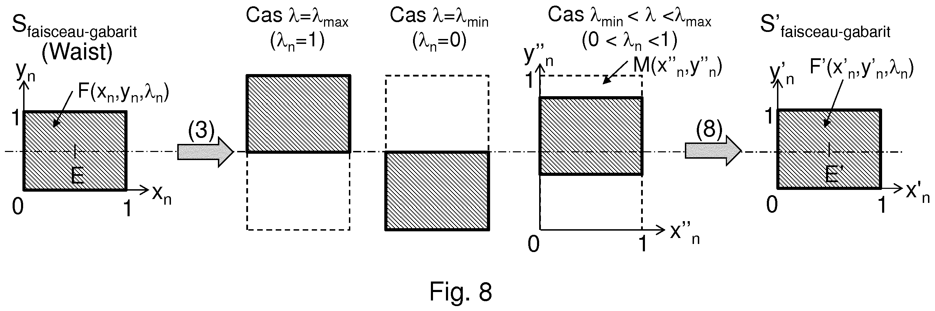

Le principe de fonctionnement du dispositif de codage multiplicatif 5 est présenté sur les figures 8 à 13 sur la base de cet exemple de motif de codage. En outre, pour simplifier les explications et alléger la formulation mathématique de l'encodage spectral du faisceau, le grandissement du système optique de décomposition spectrale 3 et celui du système optique de recombinaison spectrale 8 sont ici positifs et égaux à 1 (comme représenté sur la figure 8), et les transmissions optiques de ces deux dispositifs sont égales à 1 sur l'ensemble de leurs champs optiques utiles. La variation de ces grandissements et les transmissions optiques avec la longueur d'onde sont également négligées. Pour les mêmes raisons, la déviation angulaire introduite par le système optique de décomposition spectrale 3 est supposée linéaire avec la longueur d'onde et l'angle α_{dispersion} de dispersion spectrale introduite entre les faisceaux P_{λmin} et P_{λmax} est considéré comme étant suffisamment faible pour exprimer la formulation mathématique de l'encodage spectral du faisceau dans le cadre de l'approximation des petits angles (c'est à dire que l'on peut supposer que tan(α_{dispersion}) ≈ α_{dispersion}). L'hypothèse de linéarité de la déviation avec la longueur d'onde et l'approximation des petits angles permettent de considérer que le faisceau lumineux intersecte, rencontre, le plan du masque 51 selon une section rectangulaire dont la position varie linéairement en fonction de la longueur d'onde entre la position 3_{λmin} et la position 3_{λmax}. Néanmoins, la présente invention s'applique aussi si ces grandissements et transmissions optiques sont différents de 1, si la déviation angulaire introduite par le système optique de décomposition spectrale 3 est non linéaire avec la longueur d'onde (par exemple dans le cas d'un prisme optique) et si l'angle α_{dispersion} est important.

Les luminances spectrales des images formées au niveau des sections S_{faisceau-gabarit} et S'_{faisceau-gabarit} sont respectivement notées F(xₙ,yₙ,λₙ) et F'(x'ₙ,y'ₙ,λ'ₙ) sur la figure 8. Dans cette formulation, λ_{η} est la valeur normalisée de la longueur d'onde : λₙ = (λ - λmin)/(λmax - λmin) avec λmin ≤ λ ≤ λmax. De manière similaire, (xₙ,yₙ) et (x'ₙ,y'ₙ) sont les valeurs normalisées des coordonnées des points localisés sur les sections S_{faisceau-gabarit} et S'_{faisceau-gabarit} respectivement (comme représenté sur la figure 8). Enfin, la fonction multiplicative (comprise entre 0 et 1) du dispositif de codage multiplicatif 5 est notée M(x"ₙ,y"ₙ) sur la figure 8, avec (x"ₙ,y"ₙ) les valeurs normalisées des coordonnées des points localisés sur la zone utile de codage (zone rectangulaire représentée en pointillées sur la figure 8), c'est-à-dire du masque. La position du faisceau lumineux dans la zone utile de codage est représentée sur cette figure pour trois valeurs de la longueur d'onde : λ = λmin (cas de la figure 5b), λ = λmax (cas de la figure 5a) et le cas où λmin < λ < λmax, c'est-à-dire pour une valeur de longueur d'onde λ quelconque du faisceau indicent comprises entre ces bornes.

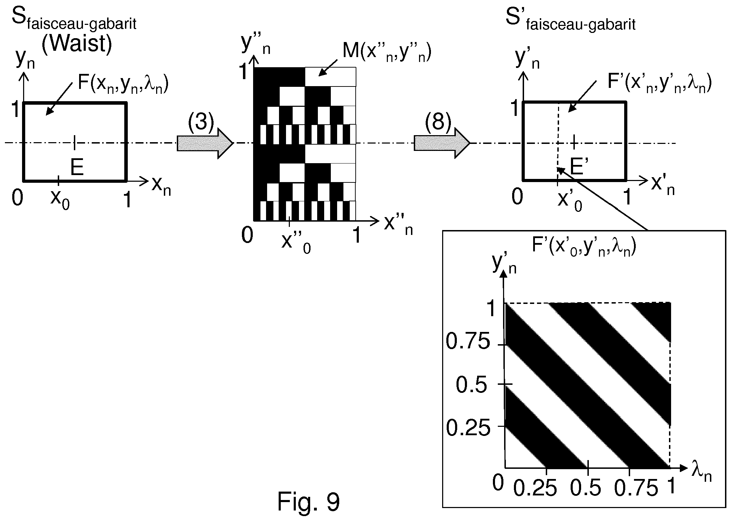

Avec ces hypothèses et notations, l'image d'un point (xₙ,yₙ) de la section S_{faisceau-gabarit} se forme au point (x'ₙ₌xₙ,y'ₙ₌yₙ) de la section S'_{faisceau-gabarit} et la luminance F'(x'ₙ,y'ₙ,λₙ) de l'image obtenue en sortie est proportionnelle au produit F(xₙ,yₙ,λₙ) x M(xₙ,(yₙ+λₙ)/2), où F(xₙ,yₙ,λₙ) est la luminance du faisceau à la section S_{faisceau-gabarit}. Ce produit constitue la formulation de l'encodage spectral du faisceau. Cet encodage spectral est illustré sur la figure 9 le long d'une ligne d'abscisse x'₀ (correspondant par exemple à la 6^{ème} colonne du masque binaire double) de l'image obtenue en sortie du système optique de recombinaison spectrale : la fonction F'(x'₀,y'ₙ,λₙ) représente le contenu spectral du faisceau lumineux le long de cette ligne (pour limiter la représentation graphique au phénomène physique à illustrer, la fonction F'(x'₀,y'ₙ,λₙ) est représentée en supposant que la fonction F(xₙ,yₙ,λₙ) constante en tout point de la section S_{faisceau-gabarit} et sur la plage de longueur d'onde [λmin, λmax]).

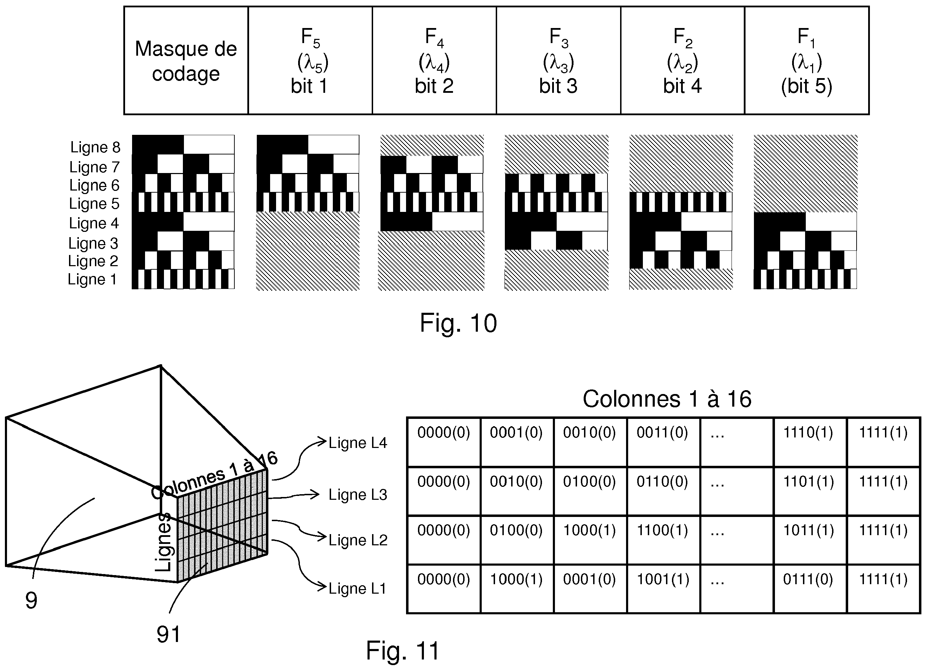

Les figures 10 à 13 représentent des illustrations graphiques du processus optique de l'encodage. Dans le cas des figures 10 et 11, le spectre de la lumière du faisceau incident est considéré ici constitué de cinq longueurs d'onde λ₁ (=λmin), λ₂, λ₃, λ₄ et λ₅ (=λmax) et le système optique de décomposition spectrale 3 est configuré pour séparer géométriquement les rayons incidents de la manière suivante :
- le faisceau F₁ (= F_{λmin}) de longueur d'onde λ₁ (=λmin) éclaire (c'est à dire traverse dans le cas d'un masque opérant en transmission ou est réfléchi dans le cas d'un masque opérant en réflexion) la moitié inférieure du masque double (comme dans les figures 5b et 5c), soit les lignes n°1 à n°4 si ses lignes sont numérotées de 1 à 8=2*n, ici selon la direction (Oy),
- le faisceau F₂ de longueur d'onde λ₂ traverse les lignes n°2 à n°5 du masque double,
- le faisceau F₃ de longueur d'onde λ₃ traverse les lignes n°3 à n°6 du masque double,
- le faisceau F₄ de longueur d'onde λ₄ traverse les lignes n°4 à n°7 du masque double,
- et le faisceau F₅ (= F_{λmax}) de longueur d'onde λ₅ (=λmax) traverse les lignes n°5 à n°8, soit la moitié supérieure du masque double (comme dans les figures 5a et 5c).

Les zones du masque de codage double respectivement traversées par les faisceaux F₁ à F₅ sont représentées sur la figure 10 (zones hors parties hachurées). L'image 91 formée au niveau de la section S'_{faisceau-gabarit} du faisceau de sortie 9 (voir la figure 11) contient 4 lignes, notées L1 à L4, de 16 pixels (il s'agit de la segmentation introduite par le motif de base du masque double) formant les m=16 colonnes. Cette image est constituée de la combinaison des cinq faisceaux F₁ à F₅, chacun ayant été encodé par la zone du masque double qu'il a traversé. Si l'on considère, dans chaque pixel de cette image, la valeur binaire à 5 bits associée à la présence ou l'absence d'une longueur d'onde dans l'ordre respectif λ₅ λ₄ X₃ λ₂ (λ₁), on obtient le tableau des valeurs placé à droite de la figure 11. Le dernier bit, correspondant à (λ₁) est entre parenthèse car il est ici toujours égal au premier bit, correspondant à (λ₅) (les faisceaux F₁ et F₅ traversant des zones de masque qui sont ici identiques). En omettant le bit 5 qui est entre parenthèses, chacune des lignes L1 à L4 contient l'ensemble des nombres, 0000 à 1111, de la base canonique binaire de degré 4.

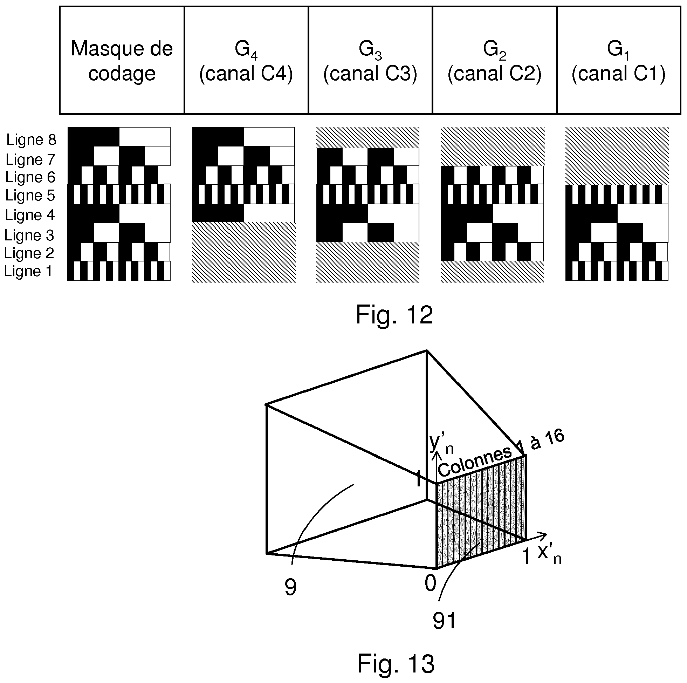

Considérant le cas plus général où le spectre de la lumière constituant le faisceau incident est continu (voir figures 12 et 13), et que l'on suppose que ce spectre englobe la gamme spectrale [λmin-λmax], c'est la configuration du motif de base du masque qui permet de fixer le nombre et les largeurs spectrales des canaux spectraux constituant la base spectrale de l'encodage. Dans le cadre du présent exemple de masque binaire double, le masque « découpe » naturellement quatre canaux spectraux notés ici C1 à C4, spectralement contigus, dont les gammes de longueurs d'onde sont [λ₁ - λ₂], [λ₂ - λ₃], [λ₃ - λ₄] et [λ₄ - λ₅] respectivement (avec λ₁ = λmin et λ₅ = λmax) et dont les propriétés optiques sont les suivantes :
- le faisceau G₁ associé au canal C1 = [λ₁ - λ₂] de longueurs d'onde éclaire les lignes n°1 à n°5 du masque double,
- le faisceau G₂ associé au canal C2 = [λ₂ - λ₃] de longueurs d'onde éclaire les lignes n°2 à n°6 du masque double,
- le faisceau G₃ associé au canal C3 = [λ₃ - λ₄] de longueurs d'onde éclaire les lignes n°3 à n°7 du masque double, et
- le faisceau G₄ associé au canal C4 = [λ₄ - λ₅] de longueurs d'onde éclaire les lignes n°4 à n°8 du masque double.

L'image 91 formée au niveau de la section S'_{faisceau-gabarit} du faisceau de sortie 9 (voir figure 13) est toujours segmentée en 16 colonnes comme dans le cas de l'image (figure 11) produite par le faisceau lumineux incident dont le spectre lumineux était constitué des cinq longueurs d'onde discrètes λ₁ à λ₅, cependant, la segmentation en ligne n'est plus présente car le contenu spectral de la lumière dans cette image suit une variation le long de l'axe vertical (illustrée en figure 9 à une position d'abscisse x'₀ donnée) décrite par la formulation de l'encodage spectral du faisceau mentionnée précédemment. Dans cet exemple, le nombre de canaux spectraux de codage peut donc être augmenté ou réduit en modifiant simplement le nombre de lignes du motif de base du masque double. Par exemple, si le motif de base du masque binaire double contient 10 lignes (c'est-à-dire n=10 au lieu de n=4 dans le présent exemple représenté) et représente la base canonique de degré 10, le nombre de canaux spectraux serait de 10. De même, en sélectionnant des hauteurs différentes de lignes dans le motif de base, il est possible de conserver le nombre de canaux spectraux tout en changeant leurs largeurs spectrales ou pour compenser une dispersion spectrale non linéaire. Par exemple, si la ligne n°1 du masque double (donc aussi la ligne n°5) est plus large, et que la ligne n°2 (donc aussi la ligne n°6) est proportionnellement plus étroite pour laisser la hauteur totale du masque double inchangée, la nouvelle longueur d'onde λ_{2bis} est alors supérieure à l'ancienne longueur d'onde λ₂, les longueurs d'onde λ₁, λ₃, λ₄ et λ₅ restant inchangées et, par conséquent, le nouveau canal C_{1bis} est plus large que l'ancien canal C₁, et le nouveau canal C_{2bis} est plus étroit que le précédent canal C₂, tandis que les canaux C₃ et C₄ demeurent identiques.

Le masque double représenté dans le présent exemple du dispositif d'encodage spectral de faisceaux lumineux 5 et schématisé en figures 5a, 5b, 5c, 9, 10 et 12 présuppose aussi que le système optique de décomposition spectrale 3 de cet exemple fonctionne dans l'approximation linéaire quant à la dispersion, comme mentionné précédemment : l'angle de dispersion, pour une longueur d'onde donnée, est en effet supposé constant dans le champ optique du faisceau-gabarit 2, c'est-à-dire qu'il ne varie pas avec la direction du rayon incident. En cas de non linéarité de cette dispersion, une solution possible est de concevoir le motif du codage du masque à partir du motif linéaire représenté ici en appliquant à ce dernier une déformation géométrique compensant les effets de cette non-linéarité sur la forme de la figure lumineuse obtenue sur le dispositif de codage multiplicatif 5.

Ainsi, le principe de l'encodage est illustré ici en s'appuyant sur l'exemple d'un masque binaire, mais un codage spectral plus complexe du faisceau lumineux, par exemple avec un masque multiplicatif non binaire (à plus de deux niveaux), c'est-à-dire dont les valeurs couvrent des niveaux de gris entre 0 (opacité totale à la lumière) et 1 (transparence totale) serait également envisageable.

Enfin, dans l'exemple illustré sur les schémas des figures 5a, 5b et 5c, le système optique de recombinaison spectrale 8 permet de « recombiner » spectralement le faisceau lumineux en compensant totalement la séparation géométrique des rayons incidents qui a été introduite par le système optique de décomposition spectrale 3 en fonction des longueurs d'onde. Il s'agit de la configuration préférée de la présente invention car elle assure un encodage spectral optimal en termes de richesse d'encodage et de rendement lumineux d'encodage. Toutefois, la présente invention s'applique aussi au cas où la compensation est partielle, mais dans ce cas, la richesse de l'encodage spectral n'est maximale que sur la zone de l'image de sortie dans laquelle se superposent toutes les longueurs d'onde de la gamme spectrale [λmin-λmax]. La lumière localisée en dehors de cette zone, qui n'est pas constituée de l'ensemble des longueurs d'onde du faisceau incident, n'est pas spectralement encodée sur la totalité de gamme spectrale [λmin-λmax]. De plus, le niveau lumineux est plus faible dans cette zone que dans celle où se superposent toutes les longueurs de la gamme spectrale [λmin-λmax].

La répétition totale du motif de base est la configuration préférée de la présente invention, mais l'invention s'applique aussi si la répétition du motif est partielle ou éventuellement s'il n'y a pas de répétition du tout.

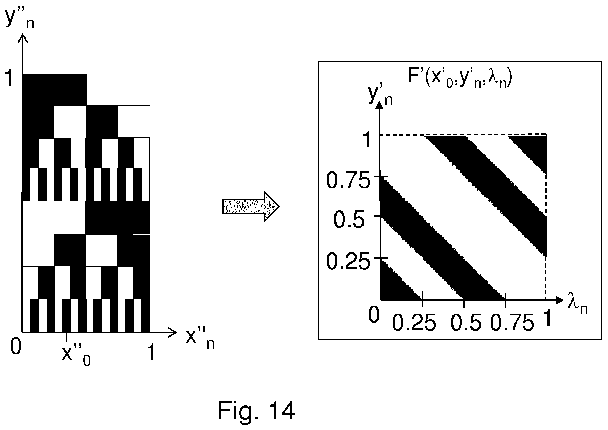

De nombreux motifs possibles peuvent être choisis de manière à assurer une richesse d'encodage spectrale suffisamment élevée. Par exemple, il est possible d'utiliser un motif constitué du motif de base du masque binaire double de la figure 10 et d'un motif complémentaire, comme ceci est par exemple représenté sur la figure 14. Dans ce cas, la richesse d'encodage reste aussi élevée qu'avec le masque binaire double de la figure 10, comme l'illustre la nouvelle fonction F'(x'₀,y'ₙ,λ_{η}) obtenue, également représentée sur la figure 14.

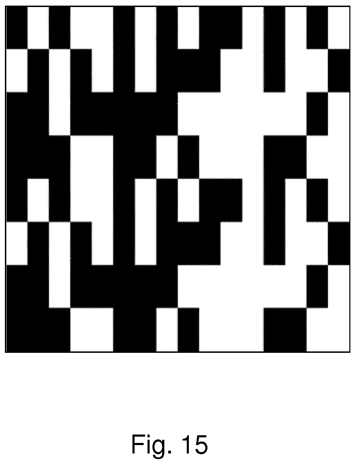

Un autre exemple de masque est représenté sur la figure 15. Un tel masque correspond au masque précédemment représenté dont les colonnes ont été mélangées. Ainsi, toutes les colonnes demeurent différentes les unes des autres, ce qui est une configuration préférée de masque dans le cadre de la présente invention.

En effet, une répétition de colonne peut être envisagée mais ceci présente l'inconvénient d'augmenter l'ambiguïté ce qui complique ensuite l'algorithme de reconstruction.

Enfin, plus généralement, il est aussi possible d'utiliser un motif de codage qui n'est pas organisé en lignes et en colonnes (par exemple un motif de contenu quelconque connu). Dans ce cas, la segmentation en canaux spectraux n'est pas induite par le motif de codage lui-même, mais peut être assurée par le dispositif de détection (par exemple une caméra multispectrale) du système dans lequel est utilisé le dispositif d'encodage spectral de faisceaux lumineux.

Dans le cadre de l'utilisation de la présente invention dans le domaine des scanners tridimensionnels dits « à lumière structurée », un projecteur de lumière spectralement structurée comporte un couplage optique entre une source de lumière, par exemple telle que décrite précédemment, positionnée en entrée du projecteur et un système optique de projection configuré pour projeter l'image produite sur une scène à observer. Par exemple, dans le cas de l'utilisation du masque binaire double de la figure 10 et si le spectre de la lumière constituant le faisceau incident est continu sur une plage de longueurs d'ondes entre au moins λmin et λmax, le motif projeté est constitué d'une multitude de bandes lumineuses spectralement structurées dont le taux de corrélation entre les encodages spectraux des différentes bandes lumineuses est suffisamment faible pour pouvoir distinguer facilement les bandes les unes des autres. En outre, pour un nombre de lignes « n » du motif de base du masque double (considérant que le spectre de la source lumineuse employée est continu), le nombre de canaux spectraux est égal à « n » et l'image produite par le projecteur est segmentée en 2ⁿ bandes lumineuses structurées. En pratique, avec un tel masque, pour assurer une précision suffisante sur la carte de profondeur de la scène, le nombre n de lignes du motif de base est de préférence au minimum de 4, voire mieux d'au moins 5, et avantageusement supérieur ou égal à 7, par exemple compris entre 7 et 14.

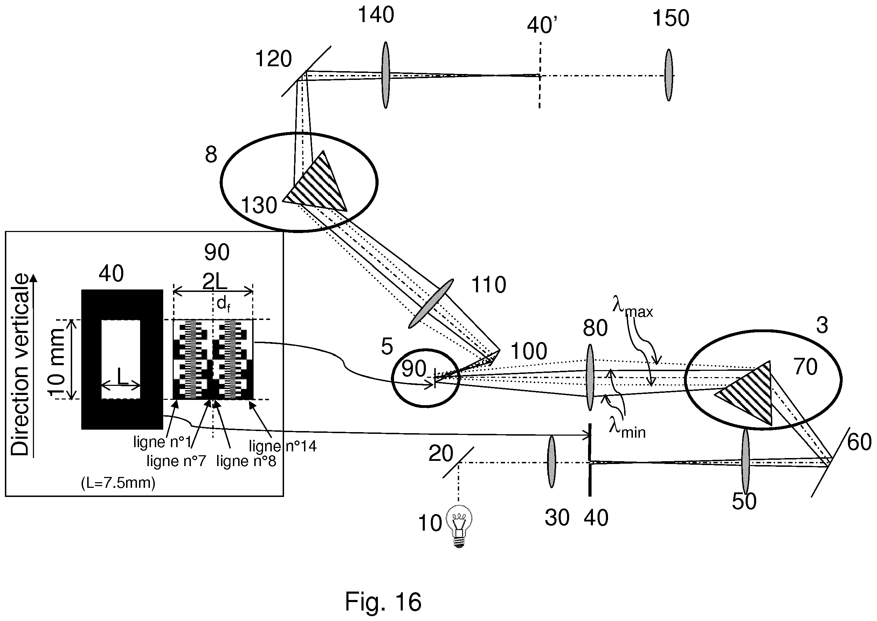

La figure 16 présente schématiquement la structure d'un projecteur selon un exemple de réalisation de la présente invention.

Dans cet exemple, le projecteur de lumière spectralement structurée est représenté selon une vue de dessus, par exemple comme s'il était posé sur une table optique de laboratoire. Le projecteur serait donc disposé horizontalement.

Le projecteur comporte par exemple ici en série une source de lumière 10, un système optique de décomposition spectrale 3, un dispositif d'encodage 5, un système optique de recombinaison spectrale 8 et un système optique de projection 150.

La source de lumière 10 comporte par exemple une lampe à incandescence, par exemple de marque Osram (modèle ECL-669-BO, puissance 210 W).

Par commodité, notamment pour rendre le projecteur plus compact, le projecteur comporte ici un miroir plan de renvoi 20. Il comporte en outre ici un condenseur optique 30 pour optimiser la quantité de lumière collectée de la source, et, de manière optionnelle, un diaphragme 40 pour faciliter les réglages et/ou pour délimiter géométriquement le faisceau. Ici, le condenseur 30 est configuré pour concentrer la lumière sur le diaphragme 40, qui est par exemple métallique. Son ouverture a par exemple ici pour dimensions 10 x 7.5 mm² (hauteur x largeur). Ces éléments sont bien entendu optionnels et indépendants au sens ou seulement une partie d'entre eux peut être présente. Ces trois éléments ici présents sont par exemple disposés en série entre la source de lumière 10 et le système optique de décomposition spectrale 3. L'ouverture rectangulaire du diaphragme 40 permet de matérialiser la section S_{faisceau-gabarit} précédemment décrite selon un exemple de réalisation.

La lampe de la source de lumière 10 et le condenseur 30 sont par exemple ceux d'un vidéoprojecteur de la marque ACER (marque déposée), modèle X1173a DLP.

Le système optique de décomposition spectrale 3 comporte par exemple ici un prisme 70. Le prisme 70 est ici configuré pour disperser spectralement et angulairement le faisceau qui lui parvient.

Le prisme 70 est par exemple en verre Crown LaK10 (Schott) et d'angle 60°. Dans l'exemple de réalisation schématisé figure 16, sa face d'entrée est par exemple orientée à 25° par rapport à l'axe du faisceau incident qui lui parvient.

En outre, dans le présent exemple de réalisation, le projecteur comporte un objectif 50, qui comporte par exemple une lentille convergente, et un miroir plan 60, disposés entre le diaphragme 40 et le système optique de décomposition spectrale 3.

Dans le présent exemple, l'image du diaphragme 40 est formée à l'infini à l'aide de l'objectif 50. Par exemple le diaphragme est positionné au foyer objet de l'objectif 50. Le miroir plan 60, qui permet d'améliorer la compacité du dispositif, oriente ensuite le faisceau vers le prisme 70. Dans cet exemple, la normale du miroir est orientée à environ 26° par rapport à l'axe du faisceau incident.

En outre, le projecteur comporte un objectif 80, ici disposé entre le système optique de décomposition spectrale 3 et le dispositif d'encodage 5, qui est configuré pour focaliser la lumière dispersée par le système optique de décomposition spectrale 3, dans un plan donné où est positionné le dispositif d'encodage 5.

Le plan susmentionné est donc par exemple localisé au niveau du foyer image de l'objectif 80.

Les objectifs 50 et 80 sont possiblement identiques. Ils sont par exemple de type Clairaut, d'ouverture numérique égale à f/3 et de focale 150 mm.

Le dispositif de codage multiplicatif 5, également désigné occasionnellement ici dispositif de codage multiplicatif, peut fonctionner en réflexion ou en transmission. Ici, il fonctionne en réflexion. Ceci permet par exemple de rendre le dispositif plus compact.

Le dispositif d'encodage 5 comporte un masque 90 qui est par exemple formé ici par une cellule DMD. La cellule DMD est par exemple une cellule DMD de marque Texas-Instrument, de dimension du champ optique utile hauteur x largeur de 10 x 15 mm², et de résolution SVGA 800 x 600.

La cellule DMD est positionnée perpendiculairement à l'axe moyen du faisceau incident et orientée de manière à ce que sa hauteur h (10 mm) soit parallèle à la longueur (environ 10 mm) de l'image du diaphragme sur la cellule DMD et que sa largeur (15 mm) soit orientée suivant la direction liée à la dispersion spectrale de la source lumineuse.

Le masque 90 utilisé est un masque dit « double », tel que décrit précédemment, dont la répétition s'effectue selon la direction liée à la direction de dispersion spectrale, c'est-à-dire selon la direction horizontale transverse au faisceau incident dans cet exemple de réalisation. Autrement dit, dans cet exemple de réalisation les « lignes » du masque 90 se succèdent selon la direction horizontale alors que les « colonnes » du masque se succèdent selon la direction verticale.

Le masque 90 est en outre configuré de sorte que sa largeur (2*L), c'est-à-dire sa dimension prise selon la dispersion du faisceau, est égale au double de la largeur L du diaphragme 40 tandis que sa hauteur est égale à celle du diaphragme 40.

A titre d'exemple, le masque 90 représenté sur la gauche de la figure 16 est un masque double et binaire, c'est-à-dire noir (absorbant la lumière) ou blanc (réfléchissant la lumière en cas de fonctionnement en réflexion) selon la zone (ce qui correspond ici respectivement à la valeur minimale ou maximale de la gamme des valeurs de pilotage de la cellule DMD).

Dans le cadre de l'utilisation d'une cellule DMD, ce motif de codage double est par exemple l'image affichée sur la cellule DMD via un ordinateur connecté au projecteur.

Ce masque comporte un motif formé d'une série de 2*n lignes avec n=7, et comportant m=2^7=128 colonnes. En d'autres termes, le codage est ainsi effectué sur n=7 canaux spectraux contigus, appelés C₁ à C₇, s'étendant à titre d'exemple ici de λmin= 400 nm à λmax= 680 nm, ce qui permet d'encoder spectralement 2⁷ = 128 bandes lumineuses horizontales. En outre, compte tenu de la possible non-linéarité de l'angle de déviation du prisme 70 ici utilisé en fonction de la longueur d'onde, les canaux spectraux susmentionné C₁ à C₇ peuvent différer en largeur spectrale : les gammes spectrales (en nm) des canaux spectraux C₁ à C₇ sont par exemple ici [400-419], [419-442], [442-470], [470-504], [504-547], [547-603] et [603-680] respectivement.

Les lignes n°1 à n°7, correspondant à la moitié gauche du masque représenté figure 16 qui forme un premier sous-motif, seraient alors éclairées par le faisceau de longueur d'onde λmin, tandis que les lignes n°8 à n°14, correspondant à la moitié droite du masque représenté figure 16 qui forme un deuxième sous-motif, seraient alors éclairées par le faisceau de longueur d'onde λmax. Ainsi, la démarcation d_{f} entre les lignes n°7 et n°8, visualisée par un trait mixte, seraient bien superposée à la frontière entre les faisceaux de longueur d'onde λmin et λmax.

On remarque en outre ici que les lignes du premier sous-motif ont été mélangées, au sens où elles ne se succèdent pas selon l'ordre des puissances de 2, elles sont par exemple agencées dans l'ordre suivant : 2^2, 2^4, 2^6, 2^7, 2^5, 2^3, 2^1. En effet, le motif de base (moitié gauche ou moitié droite du motif de codage double représenté sur la figure 16 car dans cet exemple les deux sous-motifs sont identiques) correspond au masque binaire canonique de degré 7, comme expliqué précédemment. Comme représenté sur cette figure, le motif canonique de base du masque binaire double n'a pas nécessairement besoin d'être organisé par valeurs croissantes comme dans le cas des figures 9 à 14 : toute permutation en ligne et en colonne dans ce motif de base ne réduit pas la richesse de l'encodage spectral.

Par ailleurs, le deuxième sous-motif étant ici identique au premier sous-motif, il comporte donc le même mélange des lignes.

Ainsi dans cet exemple de réalisation du masque, toutes les colonnes sont différentes les unes des autres.

Avec le réglage sélectionné des micro-miroirs de la cellule DMD dans le présent exemple de réalisation, le faisceau optique se réfléchit dans une direction non coplanaire avec le plan du schéma (le faisceau se dirige un peu vers le bas). L'angle entre l'axe moyen du faisceau incident et la projection horizontale du faisceau réfléchi est d'environ 16°.

Ici, notamment pour compenser la composante angulaire verticale induite lors de la réflexion du faisceau sur la cellule DMD afin de ramener le faisceau dans un plan horizontal, le projecteur comporte un miroir plan 100. Pour exemple, l'angle entre les projections horizontales de la normale au miroir plan 100 et de l'axe moyen du faisceau incident issu du dispositif de codage multiplicatif 5 est d'environ 29°.

En sortie du dispositif d'encodage 5, le projecteur comporte le système optique de recombinaison spectrale 8. Le système optique de recombinaison spectrale 8 est configuré pour recombiner en un faisceau recombiné le spectre décomposé spectralement et encodé par le dispositif d'encodage 5. Il comporte par exemple ici un prisme 130.

De plus, dans le présent exemple de réalisation, le projecteur comporte en série un objectif 110, le prisme 130 du système optique de recombinaison spectrale 8, un miroir plan 120 et un objectif 140 qui sont respectivement identiques aux éléments 80, 3, 60 et 50 disposés en ordre inverse. C'est-à-dire, par exemple, que les objectifs 110 et 80 sont identiques, le prisme 130 est identique au prisme 70 et sa face d'entrée est orientée à 25° par rapport l'axe moyen du faisceau incident qui provient de l'objectif 110, le miroir plan 120, dont la normale est orientée à environ 47° par rapport l'axe moyen du faisceau incident issu du prisme 130, est identique au miroir plan 60, et l'objectif 140 est identique à l'objectif 50. Le plan où est positionné le masque 90 est localisé au niveau du foyer objet de l'objectif 110.

Dans cet exemple de réalisation, les éléments 100, 110, 8, 120 et 140 permettent ainsi d'une part de recombiner la lumière dispersée par les éléments 50, 60, 3 et 80 et encodé par le dispositif de codage multiplicatif 5, et d'autre part de former une image intermédiaire 40' du diaphragme 40 à une position déterminée tout en limitant un encombrement du projecteur.

L'image 40' obtenue a alors ici les propriétés suivantes : ses dimensions sont de 10 x 7.5 mm² et est segmentée en 2⁷ bandes horizontales lumineuses spectralement structurées. La structuration spectrale est telle que quelle que soit la (fine) section verticale considérée de cette image, elle est composée de 2⁷ éléments/pixels structurés d'encodages spectraux différents les uns des autres.

L'image intermédiaire 40' est enfin projetée sur la scène à étudier à l'aide du système optique de projection 150. Le système optique de projection 150 comporte par exemple un objectif dont la focale est d'environ 30 mm.

Dans l'exemple de réalisation de la figure 16, le champ projeté obtenu mesure alors environ 100 x 75 cm² (hauteur x largeur) à 3 mètres de distance de l'objectif 150.

Enfin, les focales des optiques 50, 80, 110 et 140, les dimensions du diaphragme 40, le pouvoir de dispersion angulaire du système dispersif 3 et les dimensions du champ optique du masque sont choisis de manière cohérente. Dans cet exemple, les différents éléments précités ont par exemple été définis de la manière suivante :
- La cellule DMD et les prismes ont été fixés a priori par leur facilité d'utilisation, leur commodité et leur disponibilité.
- Pour que le grandissement optique entre la position du diaphragme 40 et le masque 90 soit unitaire (par mesure de simplicité, bien que ce ne soit pas obligatoire), les optiques 50, 80, 110 et 140 sont identiques: par conséquent, dans la direction perpendiculaire à la direction associée à la dispersion spectrale (c'est-à-dire ici dans la direction verticale), la dimension du diaphragme est fixée à 10 mm pour que son image s'adapte exactement à l'une des dimensions du masque 90, soit ici la hauteur, soit 10 mm, de la cellule DMD.
- L'autre dimension du diaphragme a été fixée à la moitié de la longueur (15 mm) du champ optique du masque 90, soit ici 7.5 mm dans le cas de la cellule DMD.
- Dans la direction associée à la dispersion spectrale, le choix de la focale des optiques 50, 80, 110 et 140 est lié au pouvoir de dispersion angulaire du système optique de décomposition spectrale, en l'occurrence du prisme 70 utilisé. La valeur de la focale est calculée de manière à ce que l'image d'une fente infiniment fine qui serait placée à l'emplacement du diaphragme (et orientée perpendiculairement à la direction associée à la dispersion spectrale, c'est-à-dire verticalement) couvrirait, après dispersion en longueurs d'onde, la moitié de la largeur (15 mm) du champ optique du masque, ici de la cellule DMD, soit 7.5 mm. La gamme des longueurs d'onde considérée à titre d'exemple pour ce calcul s'étend ici de λmin= 400 nm à λmax= 680 nm. Compte tenu du grandissement optique unitaire entre la position du diaphragme et le masque et de l'étendue de la dispersion spectrale induite à la position du masque, la figure lumineuse (visible à l'oeil) obtenue sur le masque couvrait donc l'ensemble du champ optique utile de ce dernier (soit 10 x 15 mm² dans le cas de la cellule DMD utilisée ici). Par conséquent, dans cet exemple, les « traces » S_{λmin} et S_{λmax} des faisceaux extrêmes P_{λmin} et F_{λmax} sont juxtaposées dans le plan du dispositif de codage multiplicatif 5.

Cet exemple de réalisation illustre la configuration préférée de l'invention : le motif de codage du dispositif de codage multiplicatif 5 est binaire et le système optique de recombinaison spectrale 8 recombine spectralement le faisceau lumineux en compensant totalement la séparation géométrique des rayons incidents dépendante de la longueur d'onde qui a été introduite par le système optique de décomposition spectrale 3.

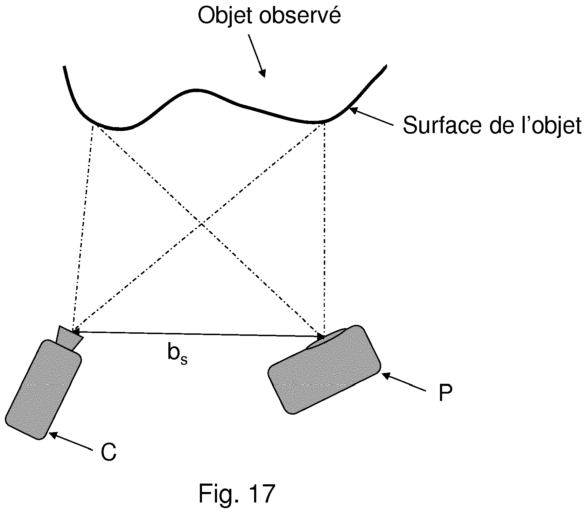

La figure 17 représente schématiquement un scanner tridimensionnel à lumière structurée selon un exemple de réalisation de la présente invention. Il comporte un projecteur, ici positionné côté droit, et un dispositif de détection, ici positionné côté gauche, à une distance bₛ du projecteur, appelée « base stéréoscopique ».

Pour l'acquisition, le dispositif de détection utilisé est ici par exemple une caméra hyperspectrale de marque SPECIM à miroir tournant (modèle Kappa DX4 PS) ; elle comporte 256 pixels (les colonnes de l'image) x 512 pixels (les lignes de l'image). La caméra est par exemple positionnée au-dessus du projecteur, l'axe de projection du projecteur et celui de l'objectif de la caméra étant alors dans un même plan vertical, mais bien entendu, ils pourraient être disposés l'un à côté de l'autre. La base stéréoscopique (la distance bₛ) est alors verticale et, ici, par exemple égale à 10 cm. Une option intéressante est par exemple d'effectuer l'acquisition sur les 7 canaux spectraux C₁ à C₇ afin de respecter la segmentation en longueur d'onde induite par la géométrie du masque utilisé.

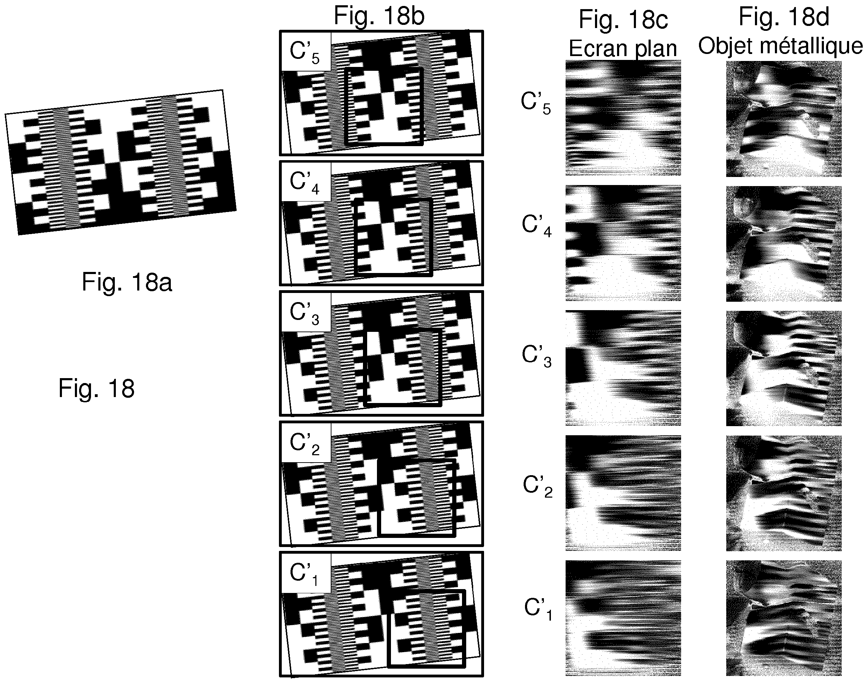

Néanmoins, pour illustrer le fait que la segmentation en longueur d'onde peut être fixée par le dispositif de détection du scanner dans lequel est utilisé le dispositif d'encodage spectral de faisceaux lumineux (notamment quand le masque n'est pas organisé en lignes et en colonnes), l'acquisition a été effectuée sur 7 canaux spectraux contigus, appelés C'₁ à C'₇, de largeurs spectrales identiques (40 nm) et s'étendant de λmin= 400 nm à λmax= 680 nm qui sont représentés figure 18 en référence à l'exemple détaillé ci-après.

Les mesures d'évaluation ont été effectuées dans une salle d'environ 4 x 5 m², éclairée par un éclairage plafonnier distribué uniformément de type halogène et d'environ 600 W de puissance totale. Une grande feuille de papier blanc, collée sur un support rigide pour former un écran plan et un objet métallique couvert d'une peinture beige mat et dont les dimensions étaient d'environ 20 x 20 x 20 cm³ (il s'agissait en l'occurrence du bâti d'une source lumineuse de laboratoire) ont successivement été utilisés pour réaliser les tests d'évaluation. Ils étaient positionnés à une distance d'environ 1.5 m de la caméra.

Quelques images de l'écran blanc (figure 18c) et de l'objet métallique (figure 18d) obtenues avec la caméra hyperspectrale sont fournies en figure 18 (canaux d'acquisition C'₁ à C'₅ uniquement par souci de simplification). Dans cet exemple, le champ de la caméra est inférieur au champ du projecteur. Dans ces images, l'offset de la caméra et le niveau de signal lié à l'éclairage ambiant ont été soustraits. De plus, l'effet de lobe du faisceau projeté, c'est-à-dire la non-uniformité spatiale de son flux, a été corrigé : l'image du lobe apparent observé par la caméra s'obtient en projetant sur l'écran plan un faisceau incident non encodé, c'est-à-dire par exemple en utilisant la cellule DMD comme un miroir plan sans occulter (même partiellement) certains rayons. Le motif de codage double utilisé est représenté en figure 18a (qui est celui de base canonique 7 décrit en lien avec la figure 16). La rotation du motif, par rapport à la direction horizontal de la figure, est destinée à reproduire la rotation induite par la configuration optique d'acquisition de la caméra hyperspectrale : les « colonnes » du capteur de la caméra n'étaient pas verticales dans le test mis en oeuvre. On constate, pour chaque canal d'acquisition C'₁ à C'₅, en observant la zone encadrée du motif de codage (représenté figure 18b) et les deux images correspondantes (figures 18c et 18d représentant respectivement le cas de l'écran plan et de l'objet métallique) que l'on peut mettre en évidence la zone « utile » du masque ayant effectivement codé le faisceau lumineux dans le champ observé par la caméra. Autrement dit, il s'agit des parties du masque effectivement « vues » par les différents canaux spectraux. Ces zones de masque sont convoluées par un flou qui est induit par la largeur spectrale (ici 40 mm à titre d'exemple) des canaux spectraux de la caméra. Ce flou est similaire à un flou de bougé suivant la direction associée à la dispersion spectrale puisqu'un décalage en longueur d'onde conduit à un décalage géométrique de la zone de masque projetée comme le montre la figure 5c (mais aussi la figure 10). Il est aussi possible d'observer des déformations géométriques notables de ces zones de masques (présence d'une trame sous forme de lignes horizontales) sur les images de l'écran plan : elles sont principalement dues aux défauts d'uniformité spatiale introduits par la motorisation du miroir tournant de la caméra hyperspectrale utilisée (il s'agit d'un modèle assez ancien). Enfin, la déformation de la figure projetée avec le relief s'observe facilement en comparant les images obtenues avec l'objet métallique (figure 18d) et celles obtenues avec l'écran plan (figure 18c).

## Revendications

1. Projecteur de lumière structurée comportant successivement :
- une source de lumière (10) configurée pour émettre un faisceau d'un spectre continu entre une longueur d'onde minimale (λmin) et une longueur d'onde maximale (Àmax),
- un système optique de décomposition spectrale (3), configuré pour capter le spectre du faisceau émis par la source et le décomposer spectralement avec une image du faisceau à la longueur d'onde minimale (λmin) jouxtant une image du faisceau à la longueur d'onde maximale (λmax) dans au moins un plan prédéterminé transversal à un chemin optique du faisceau et le long d'une ligne de ce plan constituant une frontière,
- un dispositif d'encodage (5) configuré pour encoder le spectre décomposé spectralement,
le dispositif d'encodage comportant un masque (51, 90),
le masque (51, 90) étant positionné dans le plan prédéterminé, et
le masque (51, 90) comportant un motif matriciel d'encodage binaire formé d'une série de 2*n lignes et d'une série de m colonnes, où « n » est égal ou supérieur à 4, et où « m » est égal ou supérieur à 16,
une démarcation entre les lignes « n » et « n+1 » étant superposée à ladite frontière,
un sous-motif défini par les lignes « 1 » à « n » étant éclairé par l'image du faisceau à la longueur d'onde λmin et un sous-motif défini par les lignes « n+1 » à « 2*n » étant éclairé par l'image du faisceau à la longueur d'onde λmax,
le sous-motif défini par les lignes « 1 » à « n » étant identique ou complémentaire du sous-motif défini par les lignes « n+1 » à « 2*n », et
un sous-motif défini par les lignes « i » à « i+n-1 », i étant compris entre 2 et n, étant éclairé par une image du faisceau à une longueur d'onde λ donnée comprise entre λmin et λmax,
les m colonnes étant perpendiculaires à cette démarcation et
deux colonnes voisines comportant chacune un encodage binaire différent de l'autre,
- un système optique de recombinaison spectrale (8) configuré pour recombiner en un faisceau recombiné le spectre décomposé spectralement et encodé, et
- un système optique de projection (150) configuré pour projeter le faisceau recombiné sur une scène à observer.

2. Projecteur selon la revendication 1 dans lequel le masque (51, 90) comporte au moins m/5 encodages différents dans les m colonnes.

3. Projecteur selon l'une quelconque des revendications 1 ou 2 dans lequel un encodage est répété dans au plus 5 colonnes.

4. Projecteur selon l'une quelconque des revendications 1 à 3 dans lequel les m colonnes du sous-motif défini par les lignes « 1 » à « n » comportent au maximum 5 répétitions d'une même suite d'encodages différents les uns des autres.

5. Projecteur selon l'une quelconque des revendications 1 à 4 dans lequel les m colonnes du sous-motif défini par les lignes « 1 » à « n » comportent des encodages tous différents les uns des autres.

6. Projecteur selon l'une quelconque des revendications 1 à 5 dans lequel le nombre de colonnes « m » est égal à « 2^n ».

7. Projecteur selon l'une quelconque des revendications 1 à 6 dans lequel les lignes du sous-motif défini par les lignes « 1 » à « n » comportent des encodages représentant une succession de puissances de 2.

8. Projecteur selon l'une quelconque des revendications 1 à 7 dans lequel la source de lumière (10) comporte une source de lumière naturelle ou une source de lumière artificielle, par exemple une source de lumière artificielle continue, par exemple une lampe à filament ou à incandescence, une lampe halogène, une LED.

9. Projecteur selon l'une quelconque des revendications 1 à 8 dans lequel le dispositif d'encodage (5) comporte un agencement matriciel de zones réfléchissantes et de zones absorbantes.

10. Projecteur selon l'une quelconque des revendications 1 à 8 dans lequel le dispositif d'encodage (5) comporte un agencement matriciel de zones transparentes et de zones opaques.

11. Projecteur selon l'une quelconque des revendications 1 à 8 ou 10 dans lequel le dispositif d'encodage (5) comporte un système opto-électronique constitué de pixels dont la transparence optique est pilotable électroniquement, le masque (51, 90) étant formé par le système opto-électronique.

12. Projecteur selon l'une quelconque des revendications 1 à 9 dans lequel le dispositif d'encodage (5) comporte un système opto-électronique constitué de pixels dont la réflectivité optique est pilotable électroniquement, le masque (51, 90) étant formé par le système opto-électronique.

13. Projecteur selon l'une quelconque des revendications 1 à 12 dans lequel le système optique de décomposition spectrale (3) comporte un prisme optique (70) ou un réseau optique.

14. Projecteur selon l'une quelconque des revendications 1 à 13 dans lequel le système optique de recombinaison spectrale (8) comporte un prisme optique (130) ou un réseau optique.

15. Scanner tridimensionnel à lumière structurée comportant un projecteur et un dispositif de détection, **caractérisé en ce que** le projecteur est un projecteur selon l'une quelconque des revendications 1 à 14 et **en ce que** le dispositif de détection est une caméra multi-spectrale comportant au moins 4 canaux spectraux, la caméra étant disposée à une distance déterminée du projecteur, appelée « base stéréoscopique ».

16. Scanner tridimensionnel à lumière structurée selon la revendication 15, **caractérisé en ce qu'**il comporte une source de lumière secondaire pilotable électroniquement et dont le spectre est continu entre la longueur d'onde minimale (λmin) et la longueur d'onde maximale (λmax).

## Patentansprüche

1. Projektor für strukturiertes Licht, nacheinander enthaltend:
- eine Lichtquelle (10), die dazu ausgelegt ist, um einen Lichtstrahl mit einem kontinuierlichen Spektrum zwischen einer minimalen Wellenlänge (λmin) und einer maximalen Wellenlänge (λmax) zu emittieren,
- ein optisches System zur spektralen Zerlegung (3), das dazu ausgelegt ist, das Spektrum des von der Lichtquelle emittierten Lichtstrahls abzufangen und es in ein Lichtstrahlbild mit minimaler Wellenlänge (λmin) angrenzend an ein Lichtstrahlbild mit maximaler Wellenlänge (λmax) in zumindest einer vorbestimmten Ebene quer zum Strahlengang des Lichtstrahls und entlang einer eine Abgrenzung bildenden Linie dieser Ebene spektral zu zerlegen,
- eine Codiervorrichtung (5), die dazu ausgelegt ist, das spektral zerlegte Spektrum zu codieren,
wobei die Codiervorrichtung eine Maske (51, 90) aufweist,
wobei die Maske (51, 90) in der vorbestimmten Ebene positioniert ist, und die Maske (51, 90) ein Matrixmuster mit binärer Codierung aufweist, das aus einer Reihe von 2*n Zeilen und einer Reihe von m Spalten gebildet ist, wobei "n" gleich oder größer als 4 ist und wobei "m" gleich oder größer als 16 ist,
wobei eine Trennungslinie zwischen den Zeilen "n" und "n+1" der Abgrenzung überlagert ist,
wobei ein von den Zeilen "1" bis "n" definiertes Untermuster mit dem Lichtstrahlbild mit der Wellenlänge λmin beleuchtet wird und ein von den Zeilen "n+1" bis "2*n" definiertes Untermuster mit dem Lichtstrahlbild mit der Wellenlänge λmax beleuchtet wird,
wobei das von den Zeilen "1" bis "n" definierte Untermuster identisch oder komplementär zu dem von den Zeilen "n+1" bis "2*n" definierten Untermuster ist, und
wobei ein von den Zeilen "i" bis "i+n-1" definiertes Untermuster, mit i zwischen 2 und n, mit einem Lichtstrahlbild mit gegebener Wellenlänge λ, die zwischen λmin und λmax liegt, beleuchtet wird,
wobei die m Spalten senkrecht zu dieser Trennungslinie verlaufen und zwei benachbarte Spalten jeweils eine binäre Codierung aufweisen, die sich von der anderen unterscheidet,
- ein optisches System zur spektralen Rekombination (8), das dazu ausgelegt ist, das spektral zerlegte und codierte Spektrum in einen rekombinierten Lichtstrahl zu rekombinieren, und
- ein optisches Projektionssystem (150), das dazu ausgelegt ist, den rekombinierten Lichtstrahl auf eine zu betrachtende Szene zu projizieren.

2. Projektor nach Anspruch 1, wobei die Maske (51, 90) zumindest m/5 unterschiedliche Codierungen in den m Spalten aufweist.

3. Projektor nach einem der Ansprüche 1 oder 2, wobei eine Codierung in höchstens 5 Spalten wiederholt wird.

4. Projektor nach einem der Ansprüche 1 bis 3, wobei die m Spalten des von den Zeilen "1" bis "n" definierten Untermusters maximal 5 Wiederholungen einer gleichen Folge von sich voneinander unterscheidenden Codierungen aufweisen.

5. Projektor nach einem der Ansprüche 1 bis 4, wobei die m Spalten des von den Zeilen "1" bis "n" definierten Untermusters Codierungen aufweisen, die sich alle voneinander unterscheiden.

6. Projektor nach einem der Ansprüche 1 bis 5, wobei die Anzahl an Spalten "m" gleich "2^n" ist.

7. Projektor nach einem der Ansprüche 1 bis 6, wobei die Zeilen des von den Zeilen "1" bis "n" definierten Untermusters Codierungen aufweisen, die eine Folge von Zweier-Potenzen darstellen.

8. Projektor nach einem der Ansprüche 1 bis 7, wobei die Lichtquelle (10) eine natürliche Lichtquelle oder eine künstliche Lichtquelle enthält, beispielsweise eine künstliche Dauerlichtquelle, beispielsweise eine Glühfadenlampe bzw. Glühlampe, eine Halogenlampe, eine LED.

9. Projektor nach einem der Ansprüche 1 bis 8, wobei die Codierungsvorrichtung (5) eine Matrixanordnung von reflektierenden Bereichen und absorbierenden Bereichen aufweist.

10. Projektor nach einem der Ansprüche 1 bis 8, wobei die Codierungsvorrichtung (5) eine Matrixanordnung von lichtdurchlässigen Bereichen und lichtdichten Bereichen aufweist.

11. Projektor nach einem der Ansprüche 1 bis 8 oder 10, wobei die Codierungsvorrichtung (5) ein optoelektronisches System enthält, das aus Pixeln besteht, deren optische Transparenz elektrisch steuerbar ist, wobei die Maske (51, 90) aus dem optoelektronischen System gebildet ist.

12. Projektor nach einem der Ansprüche 1 bis 9, wobei die Codierungsvorrichtung (5) ein optoelektronisches System enthält, das aus Pixeln besteht, deren optisches Reflexionsvermögen elektrisch steuerbar ist, wobei die Maske (51, 90) aus dem optoelektronischen System gebildet ist.

13. Projektor nach einem der Ansprüche 1 bis 12, wobei das optische System zur spektralen Zerlegung (3) ein optisches Prisma (70) oder ein optisches Gitter aufweist.

14. Projektor nach einem der Ansprüche 1 bis 13, wobei das optische System zur spektralen Rekombination (8) ein optisches Prisma (130) oder ein optisches Gitter aufweist.

15. Dreidimensionaler Scanner mit strukturiertem Licht, enthaltend einen Projektor und eine Erfassungsvorrichtung, **dadurch gekennzeichnet, dass** der Projektor ein Projektor nach einem der Ansprüche 1 bis 14 ist und dass die Erfassungsvorrichtung eine multispektrale Kamera mit zumindest 4 spektralen Kanälen ist, wobei die Kamera in einem bestimmten Abstand vom Projektor, "stereoskopische Basis" genannt, angeordnet ist.

16. Dreidimensionaler Scanner mit strukturiertem Licht nach Anspruch 15, **dadurch gekennzeichnet, dass** er eine elektronisch ansteuerbare Sekundärlichtquelle enthält, deren Spektrum kontinuierlich zwischen der minimalen Wellenlänge (λmin) und der maximalen Wellenlänge (λmax) ist.

## Claims

1. A structured-light projector successively comprising:
- a light source (10) configured to emit a beam with a continuous spectrum between a minimum wavelength (λmin) and a maximum wavelength (λmax),
- an optical system for spectral decomposition (3), configured to capture the spectrum of the beam emitted by the source and to spectrally decompose it with an image of the beam at the minimum wavelength (λmin) juxtaposed with an image of the beam at the maximum wavelength (λmax) in at least one predetermined plane that is transverse to an optical path of the beam and along a line of that plane constituting a boundary,
- an encoding device (5) configured to encode the spectrally decomposed spectrum.
the encoding device comprising a mask (51, 90),
the mask (51, 90) being positioned in the predetermined plane, and th
e mask (51, 90) comprising a binary encoding matrix pattern formed from a series of 2*n rows and a series of m columns, wherein "n" is equal to or greater than 4, and wherein "m" is equal to or greater than 16,
a demarcation between the rows "n" and "n+1" being superposed on said boundary,
a sub-pattern defined by the rows "1" to "n" being illuminated by the image of the beam with the wavelength λmin and a sub-pattern defined by the rows "n+1" to "2*n" being illuminated by the image of the beam with the wavelength λmax,
the sub-pattern defined by the rows "1" to "n" being identical to or complementary with the sub-pattern defined by the rows "n+1" to "2*n", and
a sub-pattern defined by the rows "i" to "i+n-1", i being comprised between 2 and n, being illuminated by an image of the beam with a given wavelength λ comprised between λmin and λmax,
the m columns being perpendicular to that demarcation and
two neighboring columns each comprising a different binary encoding from the other,
- an optical system for spectral recombination (8) configured to recombine the spectrally decomposed and encoded spectrum into a recombined beam, and
- an optical projection system (150) configured to project the recombined beam onto a scene to observe.

2. A projector according to claim 1, wherein the mask (51, 90) comprises at least m/5 different encodings in the m columns.

3. A projector according to any one of claims 1 or 2 wherein an encoding is repeated in at most 5 columns.

4. A projector according to any one of claims 1 to 3 wherein the m columns of the sub-pattern defined by rows "1" to "n" comprise a maximum of 5 repetitions of the same series of encodings that are different from each other.

5. A projector according to any one of claims 1 to 4 wherein the m columns of the sub-pattern defined by rows "1" to "n" comprise encodings that are all different from each other.

6. A projector according to any one of claims 1 to 5 wherein the number of columns "m" is equal to "2^n".

7. A projector according to any one of claims 1 to 6 wherein the rows of the sub-pattern defined by rows "1" to "n" comprise encodings that represent a succession of powers of 2.

8. A projector according to any one of claims 1 to 7 wherein the light source (10) comprises a natural light source or an artificial light source, for example a continuous artificial light source, for example a filament lamp or incandescent lamp, a halogen lamp, or an LED.

9. A projector according to any one of claims 1 to 8 wherein the encoding device (5) comprises a matrix arrangement of reflective zones and absorbent zones.

10. A projector according to any one of claims 1 to 8 wherein the encoding device (5) comprises a matrix arrangement of transparent zones and opaque zones.

11. A projector according to any one of claims 1 to 8 or 10 wherein the encoding device (5) comprises an opto-electronic system constituted by pixels of which the optical transparency is electronically controllable, the mask (51, 90) being formed by the opto-electronic system.

12. A projector according to any one of claims 1 to 9 wherein the encoding device (5) comprises an opto-electronic system constituted by pixels of which the optical reflectivity is electronically controllable, the mask (51, 90) being formed by the opto-electronic system.

13. A projector according to any one of claims 1 to 12 wherein the optical system for spectral decomposition (3) comprises an optical prism (70) or an optical grating.

14. A projector according to any one of claims 1 to 13 wherein the optical system for spectral recombination (8) comprises an optical prism (130) or an optical grating.

15. A structured-light three-dimensional scanner comprising a projector and a detection device, wherein the projector is a projector according to any one of claims 1 to 14 and wherein the detection device is a multispectral camera comprising at least 4 spectral channels, the camera being disposed at a determined distance from the projector, called "stereo basis".

16. A structured-light three-dimensional scanner according to claim 15, wherein it comprises an electronically controllable secondary light source of which the spectrum is continuous between the minimum wavelength (λmin) and the maximum wavelength (λmax).
